# EUROPEAN PATENT SPECIFICATION

(11) **EP 0 858 706 B1**
(45) Date of publication and mention of the grant of the patent: **17.05.2000**
(21) Application number: 96935163.4
(22) Date of filing: 04.11.1996
(51) Int. Cl.: H04N 1/32, H04N 1/333, H04N 1/00

(54) **Store-and-forward image communications system**
Bildübertragungssystem mit Speichervermittlungsfähigkeit
Système pour transmission d'images par commutation de messages

(30) Priority: 02.11.1995 GB 9522487; 07.03.1996 GB 9604864
(43) Date of publication of application: 19.08.1998
(60) Divisional application: 99200459.8
(73) Proprietor: Inmarsat Ltd., London EC1Y 1AX (GB)
(72) Inventor: TRACHTMAN, Eyal, London N3 3AN (GB)
(74) Representative: Cross, James Peter Archibald
(86) International application number: GB9602694
(87) International publication number: WO9716919

(56) References cited:
- EP-A- 0 527 502
- GB-A- 2 240 691
- US-A- 4 910 765
- US-A- 4 922 348
- US-A- 5 253 936
- US-A- 5 361 138
- US-A- 5 367 564
- COMSAT TECHNICAL REVIEW, vol. 22, no. 1, 1 January 1992, pages 125-145, XP000327959 DIMOLITSAS S ET AL: "REAL-TIME TRANSMISSION OF GROUP 3 FACSIMILE OVER INTERCONNECTED PUBLIC SWITCHED DIGITAL MOBILE SATELLITE NETWORKS" cited in the application
- IBM JOURNAL OF RESEARCH AND DEVELOPMENT, vol. 26, no. 6, 30 November 1982, ARMONK US, pages 647-656, XP002025427 K.Y. WONG ET AL: "document analysis system"
- PATENT ABSTRACTS OF JAPAN vol. 016, no. 447 (E-1266), 17 September 1992 & JP 04 156769 A (FUJITSU LTD), 29 May 1992,

## Description

The present invention relates to apparatus and methods for image communications, particularly but not exclusively for facsimile images, particularly for mobile communications, particularly but not exclusively via satellite.

Facsimile image communication has developed to a high level of reliability. Facsimile image communications are highly standardised. The signalling stage of communication is specified in, amongst other things, Recommendation T30 (CCITT recommendation T30 "Procedure for document transmission in the general Switched Telephone Network", Volume VII, fascicle VII.3, Melbourne 1988, pages 77-167), and the image encoding is dealt within Recommendation T4 (CCITT recommendation T4 "Standardisation of group 3 facsimile apparatus for document transmission", Red Book, Volume VII, fascicle VII.3, Malaga-Torremolinos 1984, pages 16-31).

These standards were originally developed for operation between two facsimile machines over a circuit connection through the terrestrial wired public switch telephone network. Considerable difficulties arise when the same standards are employed over satellite communication links, because the relatively long transmission time can prevent effective functioning of the T30 signalling protocols.

These difficulties have been alleviated by the provision of facsimile interface units, as described in GB-A-2286739 or WO-A-94/06420 (for example). A known facsimile interface unit has a port for connection to a facsimile unit (if necessary via a PSTN or other terrestrial network), and a port for connection to a satellite ground station. Each facsimile interface unit (FIU) emulates a facsimile machine, so that the exchange of protocol signals takes place locally between each facsimile unit and its facsimile interface unit rather than being carried over the satellite transmission link.

Facsimile interface units also find application in other radio transmission systems where delays may occur; for example, in terrestrial cellular radio systems such as GSM systems.

It has been proposed to provide compression of the facsimile image at the FIU prior to transmission over the satellite channel. In "Compression of facsimile graphics for transmission over digital mobile satellite circuits", Dimolitsas and Corcoran, Milcom '91, pages 30.1.1-30.1.4 (0644-0647), 1991 IEEE, a compression scheme based on selective removal of pixels to increase run lengths is proposed.

However, some satellite links (for example the relatively low data rate Inmarsat-C link) cannot be used with this type of compression because the data rate after compression is still too high.

Many proposals for compressing image signals in general are known. For example, US-A-4410916 proposes a code book compression system in which, once a symbol (for example a printed character) is encountered on a document, an entry in a code book is created and subsequence occurrences of that symbol in the document are merely replaced by a reference to the entry in the code book. EP-A-0112991 teaches substantially the same idea, but extended further to provide code book entries for whole words as well as characters.

US-A-5422733 (and equivalent WO-A-95/21501) describes a facsimile communication system in which information is sent through a narrow bandwidth channel, and control information is written on an original document and recognised therefrom by optical character recognition (OCR), the image information in another region of the document being transmitted using conventional facsimile coding. "Text/image separation by fax with OCR", IBM Technical Disclosure Bulletin Vol. 37, No. 05 May 1994, is substantially similar.

US-A-5155601 discloses a fax communication system in which, on delivery of the fax, an acknowledgement signal is sent back by using the transmitted fax identification number to set up a return call.

US-A-4879742 discloses a facsimile communication system in which the send and receive terminals negotiate to share the price of the communication.

These schemes are intended to be provided within a facsimile transmitter (and corresponding receiver) to replace CCITT recommendation T4.

The above referenced Dimolitsas paper discusses the possibility of a store and forward facsimile system; that is, a system in which a facsimile message is stored and then later transmitted. Store and forward facsimile is also mentioned in "Real-time transmission of group 3 facsimile over interconnected public switched digital mobile satellite networks", Dimolitsas, Rieser and Feldman, COMSAT Technical Review, 22 (1992) Spring, No. 1, Clarksberg, MD, US. It is not known whether any such system has actually been put into practice. US-A-5446553 discloses a terrestrial mobile communication system in which facsimile messages may be stored whilst a user is roaming.

The above described T30 facsimile protocols were developed for direct point-to-point communications, in which a message is received as it is transmitted, and many users of facsimile apparatus rely upon the indication that a facsimile has been successfully transmitted as an indication that it has been successfully received at its destination. Accordingly, use of a store and forward system may give rise to problems or mistakes, and hence be deemed unreliable.

On the other hand, many mobile satellite communication terminals have directional antennas, which must be aligned with the communication satellite whilst the terminals are in use. Accordingly, such terminals are often not available for communication whilst they are being transported from one site to another.

Thus, in many cases, users of such terminals will be unavailable for communication at times. The same is true of other mobile radio users (for example terrestrial cellphone users) who may be unavailable due to, for example, blockage by tunnels or other physical obstructions. Point-to-point facsimile communication to such users therefore cannot be guaranteed.

The document US-A-4 910 765 discloses a facsimile terminal apparatus having a relaying function for transmitting information to one or more relay terminal apparatus so that the information is transmitted to a plurality of destination terminal apparatus via the relay terminal apparatus.

According to the present invention, there is provided a store-and-forward image communications system as claimed in claim 1.

In one embodiment, a user (particularly a mobile user) is able to store data defining transmission options, and to update or edit the data remotely.

Stored data may be present for both the transmitting party and the receiving party. In this case, the system of the present invention may provide for arbitration between the two sets of stored data, for instance to allocate payment between the two parties in the case where the two sets of stored data differ.

In another embodiment, a first user (particularly a mobile user) is able to store data defining the manner in which it wishes to receive facsimiles, and a second user is able to set data (which may also be stored) to specify the manner in which he wishes one or more facsimiles to be transmitted, the system acting to reconcile the data from the first and second users where these are in conflict. The reconciliation may involve a distribution of the price to be paid for the transmission.

Thus, it is possible to reconcile default instructions set by one user for reception of facsimiles with particular express instructions from another user (which may for example be transmitted as handling commands with the facsimile) which might need to override such defaults.

Preferably, the system is operable to store, with one or more items of such data, an indication of whether the data may, on occasion, be overridden. Where such an indication is stored, the system may be operable to charge a user who overrides such a preference.

In another embodiment, where a facsimile message is stored, a signal is transmitted back to the originating facsimile terminal indicating that this is the case. Thus, users who are expecting the normal immediate and verifiable delivery associated with a facsimile transmission will be able to modify their perceptions and reliance on the transmission.

Since the originating facsimile terminal may be a fixed, remotely located, conventional facsimile terminal, it is preferred that the notification signal should take the form of a facsimile coded signal which will be reproduced by the originating facsimile terminal as a facsimile reporting the fact that the transmitted message has been stored, rather than being transmitted directly; preferably, additional data relating to the manner in which the message will be forwarded is also transmitted back.

Preferably, the system is operable to attempt to transmit back the acknowledgement message by holding open the line after receiving the original fax call and setting up a return fax call over the same circuit. This has the advantage that, where successful, it is unnecessary to know the identity of the calling facsimile terminal, since such knowledge is not always available.

Preferably, where such knowledge is available, the system may additionally or alternatively attempt to use conventional calling line identification (CLI or caller ID) to identify the calling terminal.

The data defining user preferences may be stored at one or more central database stations, which are preferably in signalling communication with one or more facsimile interface units which receive the facsimile signal and apply compression thereto. The compression is preferably, but not necessarily, in the form of optical character recognition.

In another embodiment, the store and forward facsimile system is operable to monitor the values of control data specifying the manner in which a facsimile message is delivered from a transmitting station to a using station, and to modify stored preference control data relating to the transmitting party and/or the receiving party in dependence on the monitoring.

Thus, the system can, without human intervention, acquire default transmission control information relating to, for example, the nature (e.g. language) of documents transmitted to a given user or from a given user, the usual compression mode of a plurality of compression modes to be used by a given recipient or transmitter, or the times at which a given recipient will be available to receive transmissions.

For example, the data may relate to the amount of compression or compression modes selected by the receiving or transmitting party. Where one party selects a higher amount of compression than is required or requested by the other, then that party may bear the cost of the additional data transmitted.

Where aspects of the compression are language specific, the data may alternatively or additionally relate to the language likely to be used by the transmitting and/or the receiving party.

Alternatively or additionally, the data may relate to times of day during which the facsimile or other signal is to be forwarded or the number of occasions on which it is to be forwarded and/or to the type of confirmation to be transmitted back to the sending party on each successful or unsuccessful forwarding.

It will of course be apparent that the same principles will be applicable in some cases to store and forward data systems which are not necessarily facsimile systems.

Naturally, in each of the above aspects and embodiments, the invention extends to reception and decoding apparatus as well as transmission and coding apparatus.

Other aspects and preferred embodiments of the invention will be apparent from the following description and drawings.

Embodiments of the invention will now be illustrated, by way of example only, with reference to the accompanying drawings, in which:
Figure 1 is a schematic block diagram showing in greater detail components of a facsimile apparatus, a facsimile interface unit and an earth station according to an embodiment of the invention;
Figures 2a to 2c are flow diagrams showing in general terms the process of transmitting between: a mobile terminal and a fixed terminal; a fixed terminal and a mobile terminal; and a pair of mobile terminals, respectively.
Figure 3 is a schematic block diagram showing in greater detail the components of a portion of the facsimile interface unit of Figure 1;
Figure 4 (comprising Figures 4a-4e) is a flow diagram showing the process of operation of the apparatus of Figures 1 and 3;
Figure 5 is a block diagram showing a component of a facsimile interface unit according to the embodiment of Figure 1;
Figure 6 (comprising Figures 6a and 6b) is a flow diagram showing schematically the process of operation of the apparatus of Figure 5;
Figure 7 is a block diagram showing the structure of a database station according to this embodiment, together with associated signalling equipment;
Figure 8 is a block diagram showing schematically the structure of a record stored within a store of the database station of Figure 7;
Figure 9 is a flow diagram showing schematically the operation of the database station of Figure 7 during signalling;
Figure 10 is a flow diagram showing schematically the process of operation of the facsimile interface unit of Figure 3 in reconciling transmission preference data;
Figure 11 is a flow diagram showing in greater detail a portion of the process of Figure 10;
Figure 12 is a diagram illustrating the format of a signal output via a formatter forming part of the embodiment of Figure 3;
Figure 13 illustrates a facsimile image comprising text, graphics and image data regions; and
Figure 14 is a block diagram showing the elements of a facsimile store and forward system incorporating a first embodiment of the present invention.

### General Description of System

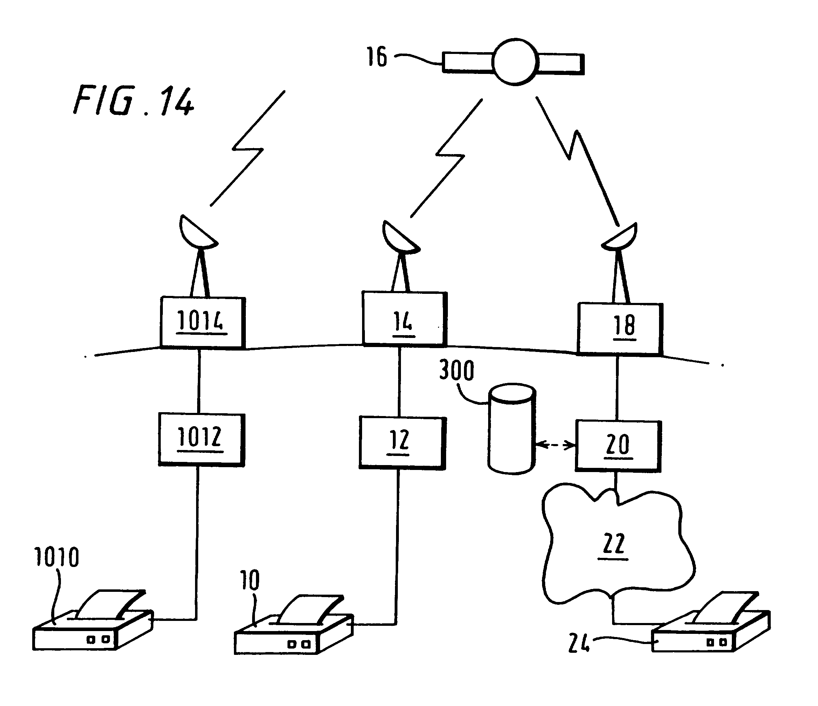

Referring to Figure 14, a first mobile facsimile terminal 10 is connected to a first mobile earth station 14 by means of a first facsimile interface unit (FIU) 12, and a second mobile facsimile terminal 1010 is connected to a second mobile earth station 1014 by means of a second facsimile interface unit 1012. A fixed facsimile terminal 24 is connected, via a PSTN 22, to a third facsimile interface unit 20, which in turn is connected to a fixed earth station 18. The fixed earth station 18 is arranged to communicate with the mobile earth station 14 via a satellite 16, which may be placed in geostationary orbit or in a non-geostationary orbit (for example a low earth orbit, an intermediate orbit (e.g. a 6 hour circular orbit), or a high elliptical orbit).

In general, the satellite 16 is used as a relay to pass facsimile signals from the first or second mobile facsimile terminals 10, 1010 to the fixed facsimile terminal 24, and *vice versa.* Communication between the first and second mobile facsimile terminals is also possible; in this case, one mobile facsimile terminal (for example the first) transmits via the satellite 16 to the fixed earth station 18, which then retransmits to the second mobile earth terminal 1010 via the satellite 16.

The present embodiment is suitable for use in the Inmarsat-M, or Inmarsat-B or Inmarsat-C systems.

Also provided is a database station 300 (which may comprise a computer located at a network control centre (NCS)) to which the facsimile interface unit 20 (connected to a fixed earth station 18) is connected via a signalling link.

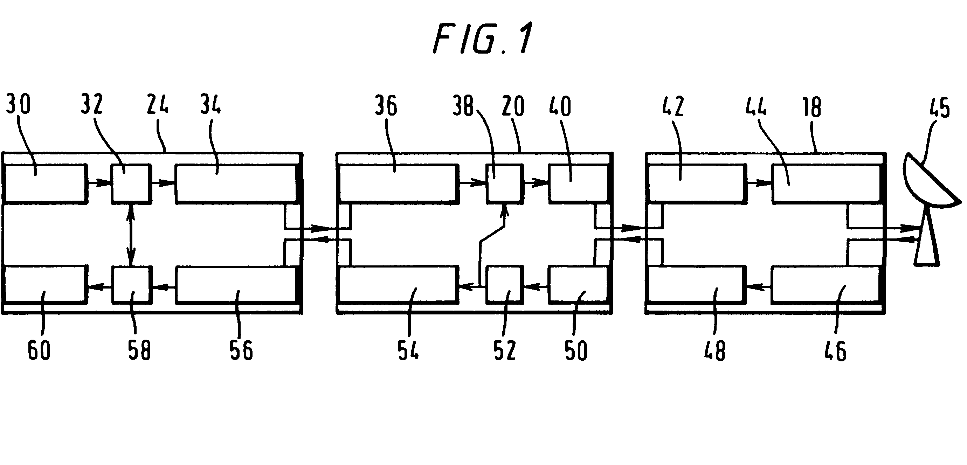

As shown in Figure 1, each facsimile terminal (e.g. 24) comprises an input device 30, such as a scanner for scanning a document or an input port from a personal computer for sending facsimile data, and a facsimile transmission microprocessor 32 which encodes signals from the input device 30 according to a predetermined algorithm. The facsimile transmission microprocessor 32 also controls the operation of facsimile transmission, including call set-up, pre-message procedure, message transmission, post-message procedure and call release. The output of the facsimile transmission microprocessor 32, in the form of digital data, is modulated by a facsimile transmission modulator 34 to produce an analogue output suitable for transmission through a public service telephone network.

The analog output of the facsimile transmission modulator 34 is connected, either directly or through a telephone circuit, to the FIU (e.g. 20), which demodulates the analog output to recover the digital facsimile data. The FIU 20 comprises a demodulator 36, which converts the modulated signal to digital data, a transmission control unit 38 which encodes the data and an output buffer 40 from which encoded data is transferred to the earth station (e.g. 18).

In the earth station 18, the data is modulated by a radio frequency (RF) modulator 42 connected to an RF transmitter 44, which transmits the signal to the satellite 16 by means of an antenna 45 directed at the satellite 16. The FIU 20 may be integrated with the earth station 18.

The fixed earth station 18 further comprises an RF receiver 46 for receiving RF signals from the satellite 16. The received signal is demodulated by an RF demodulator 48 to produce a digital signal which is stored in an input buffer 50 in the FIU 20. The digital signal is decoded by an FIU receiving control unit 52 and transferred to an FIU receiving modulator 54 which modulates the decoded data to produce an analog output signal suitable for reception by the facsimile terminal 24.

The received signal is then demodulated by a facsimile receiving demodulator 56 in the facsimile terminal 24 to produce digital data, which is decoded by a facsimile receiving microprocessor 58. The facsimile receiving microprocessor 58 controls an output device 60 such as a printer to print a hard copy of the received facsimile, or an output port to a personal computer for receiving facsimile data.

The facsimile terminal 24 and earth station 18 are known per se, and the above description thereof is merely illustrative.

The structures of the mobile facsimile terminals 10, 1010; mobile facsimile interface units 12, 1012; and mobile earth stations 14, 1014 are equivalent to those described above.

### General Description of Transmission Process

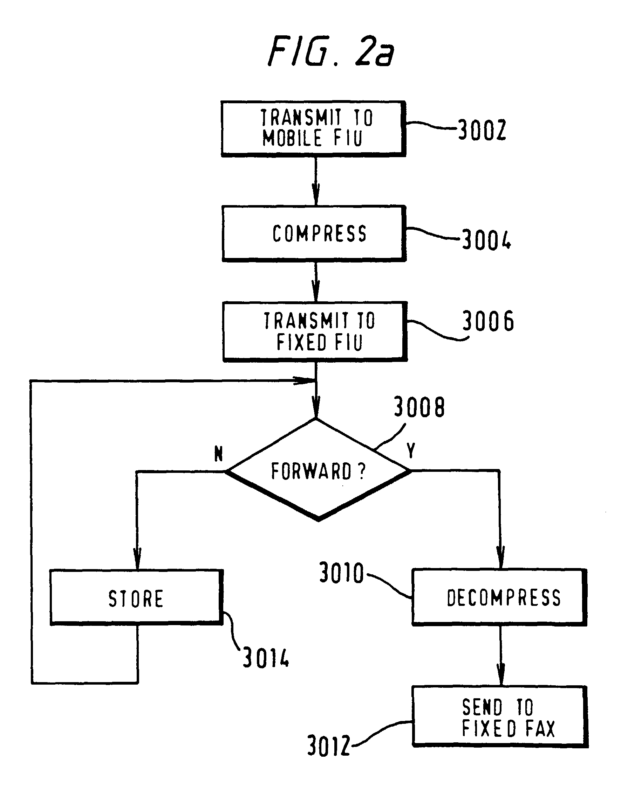

The general transmission process will now be described with reference to the accompanying Figures 2a-2c.

### Mobile to Fixed Message (Figure 2a)

This is the simplest case, since in general fixed terminals remain registered with the PSTN or other network and are hence available except when the line is busy or otherwise unavailable. It would therefore be possible for the calling mobile terminal simply to retry later, and many types of facsimile apparatus are arranged to do so automatically.

However, this is not preferred since it will make repeated attempted uses of the satellite 16, which is a scarce resource. Accordingly, in this embodiment, the facsimile message is compressed and forwarded to the fixed earth station FIU 20, which contains the control circuitry for performing retransmissions. Thus, only one call is made over the satellite channel, at a time which is convenient to the mobile user; the intelligence within the ground segment of the satellite communication systems (specifically at the fixed earth station FIU) subsequently controls the forwarding of the message.

As shown in Figure 2a, in step 3002 a mobile facsimile terminal 10 sends a facsimile message, which reaches the mobile facsimile interface unit 12. In step 3004, the mobile facsimile interface unit 12 compresses the message and, in step 3006 sends the message to the fixed earth station FIU 20 via the satellite 16.

In step 3008, if it is possible and desired to forward the message to the recipient fixed facsimile terminal 24, the fixed earth station facsimile interface unit 20 decompresses the message in step 3010 and sends it via the PSTN 22 in step 3012. If not, in step 3014 the message is stored for subsequent retransmissions.

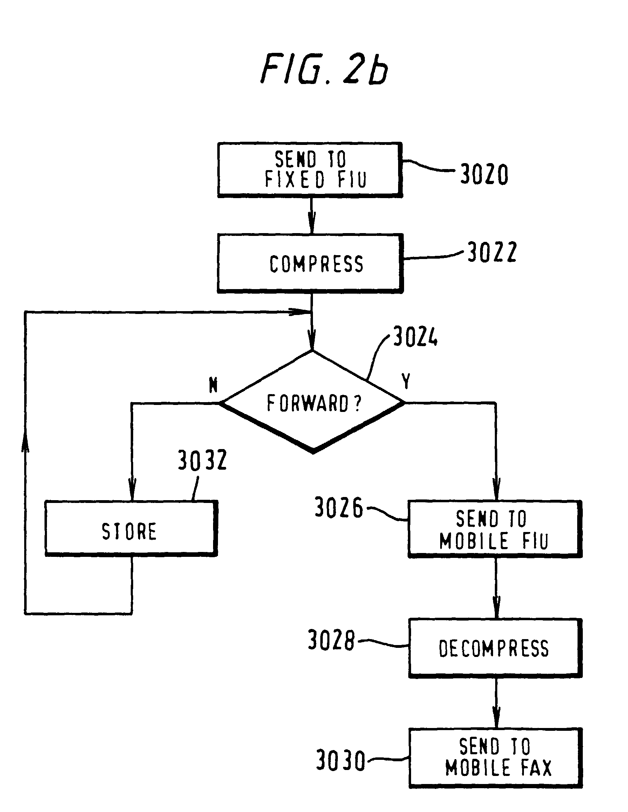

### Fixed to Mobile Message (Figure 2b)

In this case, there may be many occasions when a mobile user is inaccessible to a satellite 16; either because he is within a building, or otherwise shadowed, or because he is in transit and has not set up a directional antenna of the mobile earth station 14.

Accordingly, in this embodiment, rather than allow the fixed facsimile terminal 24 to make repeated attempts to transmit a message to the mobile terminal (which would be both frustrating for the fixed facsimile terminal user and burdensome in use of the satellite link) the facsimile message is received from the PSTN 22 and stored in the fixed earth station interface unit 20 until transmission is possible.

Referring to Figure 2b, in a step 3020, the fixed facsimile terminal 24 sends a facsimile message which reaches the fixed earth station facsimile interface unit 20 at which it is compressed in step 3022.

If it is possible, and desired, to forward the message immediately (step 3024) then in step 3026 the message is sent to the mobile facsimile interface unit 12 via the satellite 16 and earth stations 18, 14. At the mobile facsimile interface unit 12 the message is decompressed in step 3028 and sent as a facsimile to the mobile facsimile terminal 10 in step 3030.

If it is not possible or not desired to forward the message immediately then it is stored at the fixed earth station facsimile interface unit 20 in step 3032 for subsequent transmission.

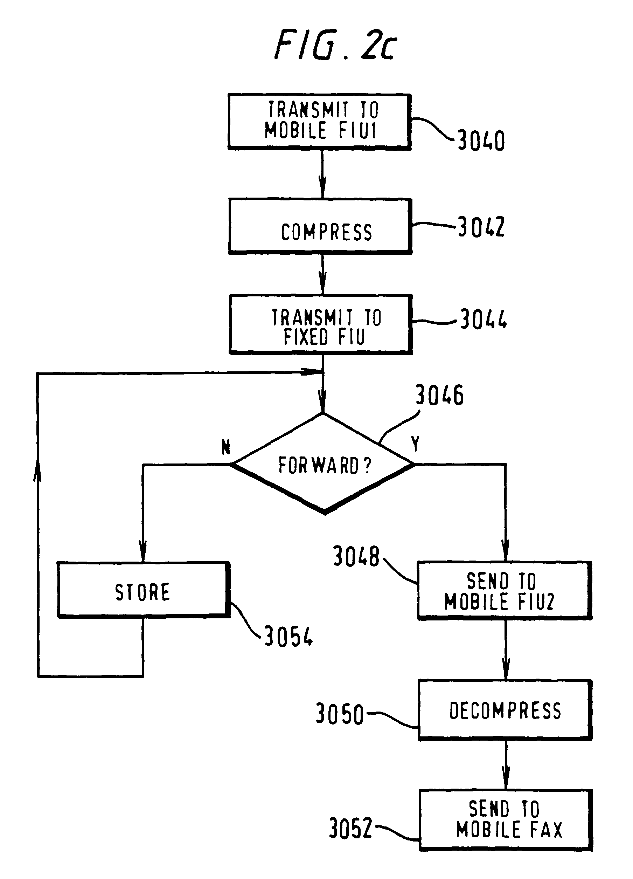

### Mobile to Mobile Message (Figure 2c)

In the case where one mobile user of a mobile facsimile terminal 10 is attempting to communicate with the user of another mobile terminal 1010, in a step 3040 the first mobile facsimile 10 transmits a fax message as far as its local mobile facsimile interface unit 12, at which the message is compressed in step 3042 and transmitted to the fixed earth station FIU 20 in step 3044 via the satellite 16.

If in step 3046 it is determined that it is desirable and possible to forward the message immediately, then in step 3048 the message is forwarded to the second mobile facsimile interface unit 1012 via the earth stations 18 and 1014 and satellite 16, in step 3048. At the second facsimile interface unit 1012 the message is decompressed in step 3050 and transmitted as a facsimile to the mobile facsimile terminal 1010 in step 3052.

If it is not desired or possible to transmit the message immediately, then in step 3054 the message is stored at the fixed earth station facsimile interface unit 20.

Thus, in each case above, the fixed earth station facsimile interface units acts as a buffer storing the facsimile message (in compressed form), to optimise the transmission of the message over the satellite link.

### Compression

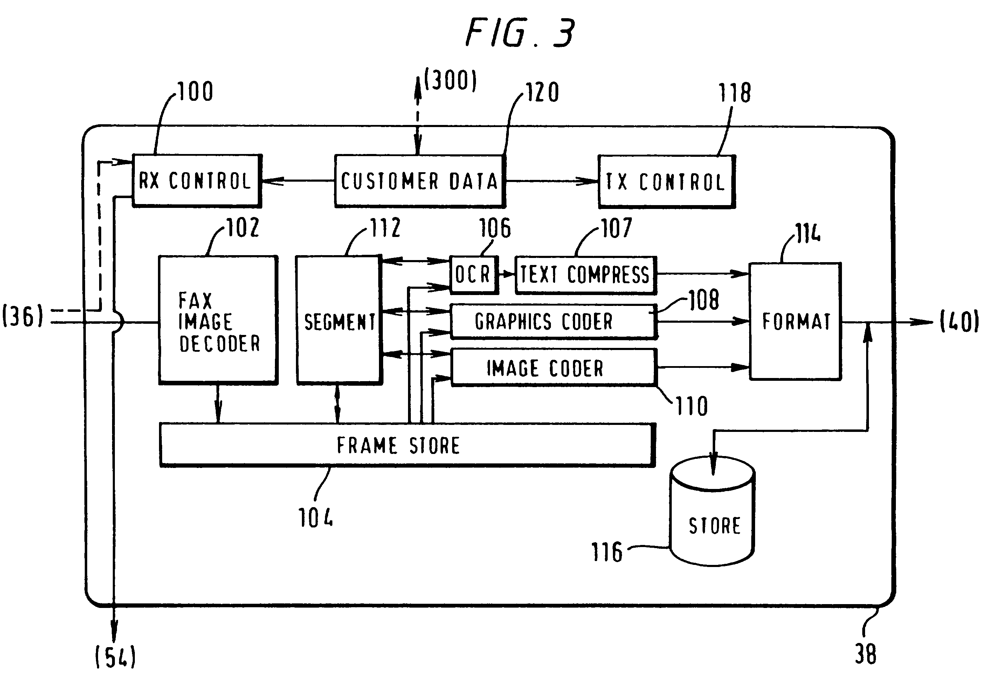

Referring to Figure 3, the structure of the transmission control unit 38 of the fixed earth station FIU of a preferred embodiment will now be discussed in greater detail.

The transmission control unit 38 in this embodiment comprises a reception signalling control unit 100 which receives T30 control signals from the demodulator 36 and transmits back signals via the modulator 54 to set up the call from the calling facsimile terminal 24. The receiver controller 100 may be a suitably programmed microcontroller. In addition to performing the usual facsimile signalling functions necessary to set up a call (available on a variety of commercially sold chip products), the receiver control circuit 100 is arranged also to selectively transmit back a message to the calling facsimile machine when a compressed facsimile image has been stored.

The transmission control unit 38 further comprises a facsimile image decoder 102 arranged to receive facsimile image signals from the demodulator 36, encoded according to the T4 standard, and to write a corresponding black/white image into a frame store 104 dimensioned to contain an entire page of an image encoded at high resolution.

Connected to read the frame store 104, in parallel, are an optical character recognition (OCR) circuit 106 (arranged to operate with several stored word dictionaries or spell-checkers in different languages and to recognise several different character sets) followed by a text compression circuit 107 (e.g. operating a Lempel-Ziv algorithm); a graphics coder circuit 108 (e.g. for generating vector graphics); and an image coder circuit 110 (e.g. arranged to apply a JPEG spatial transform algorithm). Each may be provided by a suitably programmed microprocessor, microcontroller or digital signal processing (DSP) chip. Alternatively, one or more may be provided by a dedicated chip or chip set, or one or more may be provided by a single suitably programmed microprocessor or microcontroller.

Also connected to the frame store 104; the OCR circuit 106; the graphics coder circuit 108; and the image coder circuit 110 is a segmenter circuit 112 operable to designate segments of the image in the frame store (i.e. address ranges therein) to be operated on by the OCR circuit, the graphics coder and the image coder circuit.

The outputs of the text compression circuit 107, the graphics coder circuit 108 and the image coder circuit 110 are supplied to a formatter device 114 which combines all three into a frame or packet format for supply to the output buffer 40 or a store (e.g. a large hard disk) 116.

The formatter 114 is operable to receive the text, graphics and image data from the OCR circuit 106 and text compressor 107; graphics coder 108 and image coder 110, and to generate a serial data stream as shown in Figure 12, comprising a header portion 750 consisting of conventional facsimile signalling data; identifying the message as being a compressed facsimile message, and identifying the type of compression used (i.e. text only; text and graphics; or text, graphics and image).

Also provided is a text portion 760 (or, more normally, one text portion 760 for each of several areas of text identified in the document) comprising a text header portion identifying the co-ordinates of the text area, and a character portion 764 comprising the sequence of characters occupying the text area.

In text and graphics, or text, graphics and image modes, a graphics portion 770 is also present, comprising co-ordinate data portion 772 defining the co-ordinates of the graphics area, and vector graphics data 774 providing cartesian or polar co-ordinates for recreating line vectors as described above. Finally, one or more image data fields 780 are present in text, graphics and image compression mode, comprising image area co-ordinates 782 and image data 784 consisting, in this embodiment, of run length coded sets of transform co-ordinates.

Preferably, the header portion 750 in this embodiment specifies the number of text, graphics and image areas in the remainder of the message. The message is produced by the formatter 114 as a single message in this embodiment, but it could occupy a frame, cell or packet format in other applications.

The destination of the formatted signal is selected by a transmission control circuit 118, which is also selectively operable to couple the store 116 to the output buffer 40.

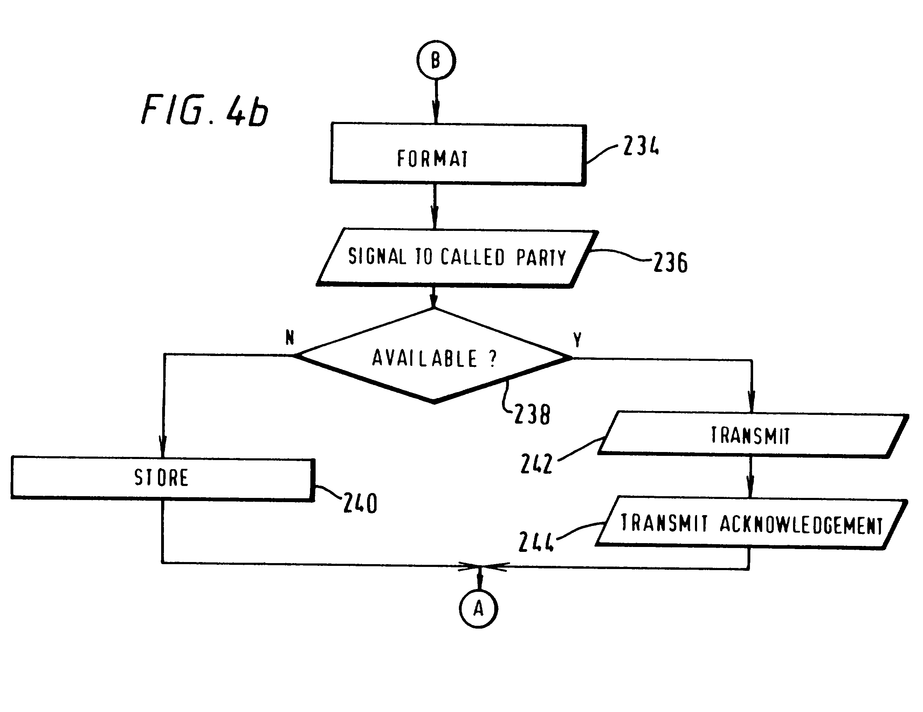

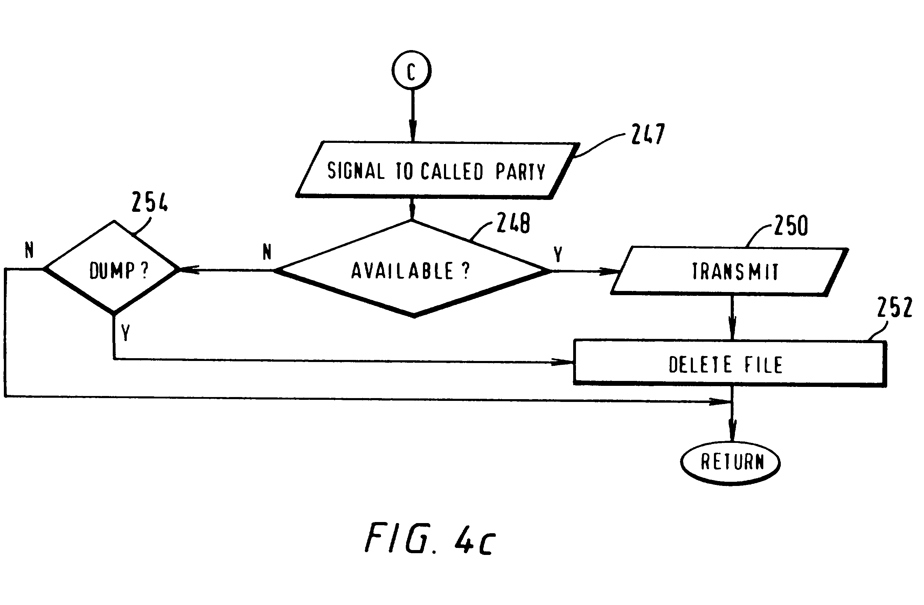

The transmission controller 118 comprises a suitably programmed microprocessor, which is operable to perform the process of steps 236-252 (Figs 4b & 4c).

Finally, a customer data signalling circuit 120 is provided, which is operable to access a remote database (for example central database station 300) via a signalling link using, for example, signalling system 7 and specifying the calling and/or called party ID, storing customer data (to be described in greater detail below), and to receive therefrom corresponding messages containing predetermined customer data for controlling the operation of the receive control circuit 100 or transmit control circuit 118.

The structure of the mobile user FIU transmission control circuit corresponds, but the store 116 is omitted.

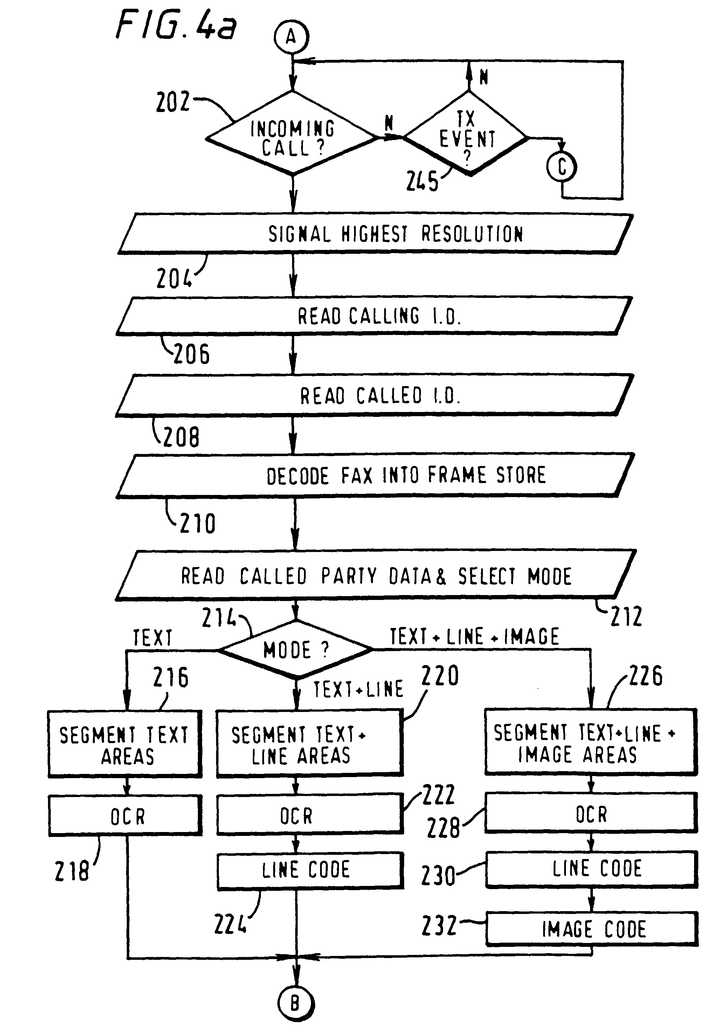

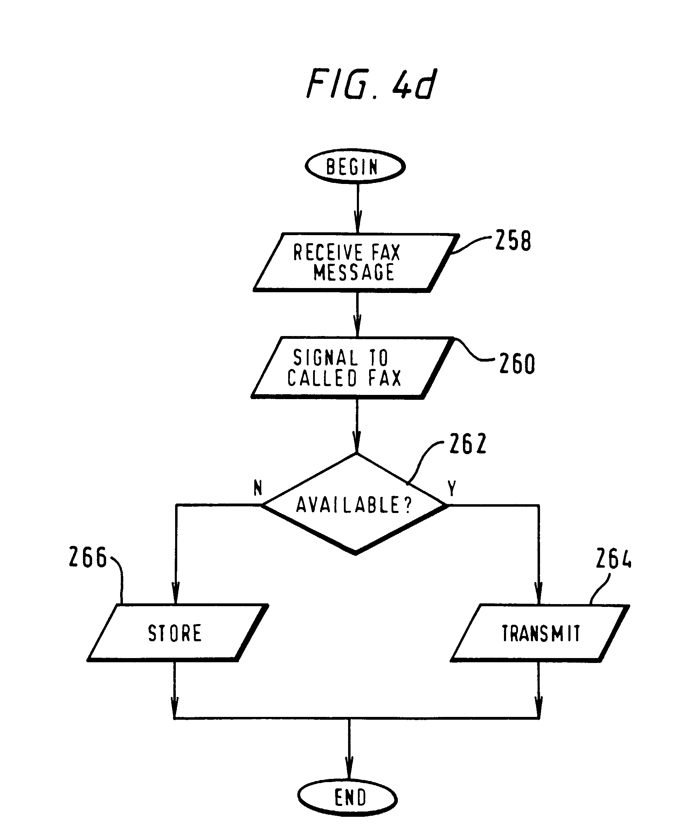

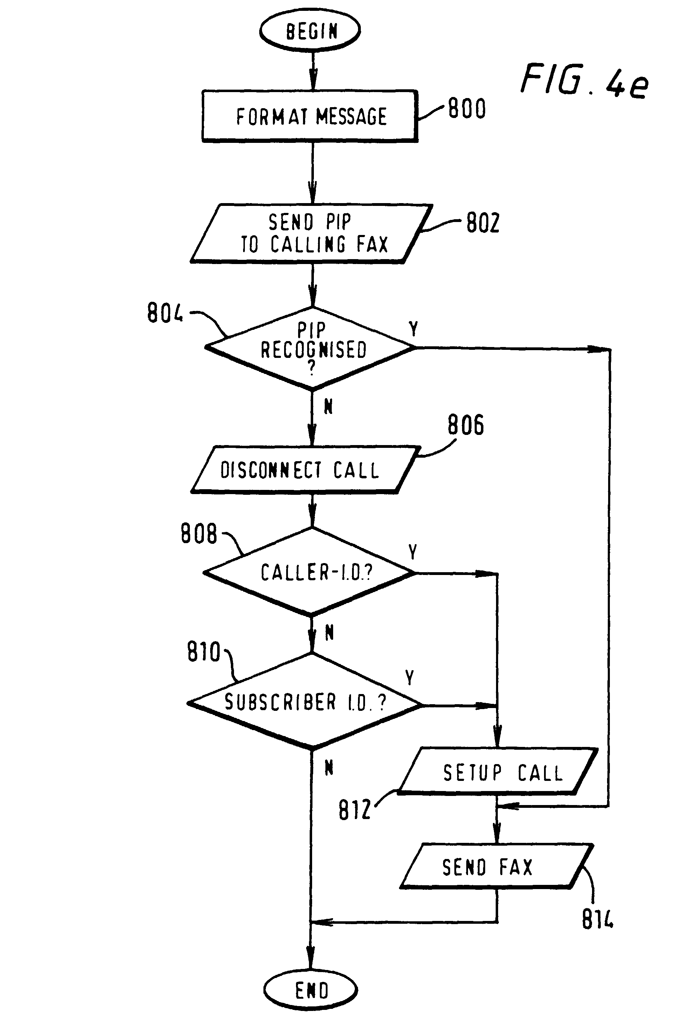

The operation of the apparatus of this embodiment will now be disclosed in greater detail with reference to Figure 4. In step 202, if the receive control circuit 100 detects an incoming call, during the initial call set-up signalling the receive control circuit 100 signals back to the calling facsimile 24 in a step 204 to request the highest available resolution on the calling facsimile 24. In this embodiment, preferably, details of common facsimile apparatus are stored in the receive control circuit 100 so that if the calling facsimile 24 supports non standard features, any such features which improve the resolution of the incoming facsimile image are accepted.

In steps 206 and 208, the receive control circuit 100 reads the calling and called telephone numbers (or, in general, ID data).

In step 210, the fax image decoder circuit 102 receives the incoming run length encoded facsimile bit stream and constructs a corresponding frame image (1 bit per pixel) in the frame store 104.

In step 212, the customer data signalling circuit 120 transmits the called (and, if available as discussed below, the calling) party ID to a remote database 300 which comprises a record for each mobile terminal 10. In reply the customer data signalling circuit 120 receives a message from the database 300 indicating, for the called party and/or the calling party, any restriction of the type of compression required by the terminal 10 (specifically, a restriction to text only compression or text and line compression); specific instructions for facsimile forwarding; particular languages to be attempted in a particular order for OCR compression; the mode of confirmation to be supplied to the calling terminal on delivery of the facsimile; and the mode, if any, of alerting the called facsimile terminal that a facsimile is waiting.

If (step 214) the compression mode is specified as text only, in step 216 the segmenter 112, in conjunction with the optical character recogniser circuit 106, segments out any text areas of the image and the optical character recogniser 106 extracts a corresponding stream of characters in step 218, which (after compression by the compressor 107) are supplied as corresponding digital data (e.g. ASCII representation for Roman characters) to the formatter 114.

If the mode is set, in step 214, to text and line images only, then in a step 220 the segmenter 112, in conjunction with the OCR circuit 106 and graphics coder 108, segments out any text area and any line areas of the image in the frame store 104. Then, in step 222 (as in step 218) the OCR circuit 106 extracts digital data corresponding to text characters from the text areas, which are then text-compressed. In a step 224, the graphics coder 108 encodes the line graphics areas identified by the segmenter 112 and generates corresponding line output data to the formatter 114.

If the compression mode is specified as text, line and image compression, in step 226 the segmenter 112 (in conjunction with the OCR circuit 106, graphics coder 108 and image coder 110) segments the image into text areas, line areas and image areas. In step 228 (as in steps 218 or 222) the OCR circuit 106 and text compression circuit 107 generate a stream of compressed digital data representing text characters encoding the text areas; in step 230 (as in step 224) the graphic coder 108 generates a stream of graphics codes to represent the graphic areas; and in a step 232, the image coder generates a stream of digital image data representing the image areas of the facsimile. All three streams of data are supplied to the formatter 114.

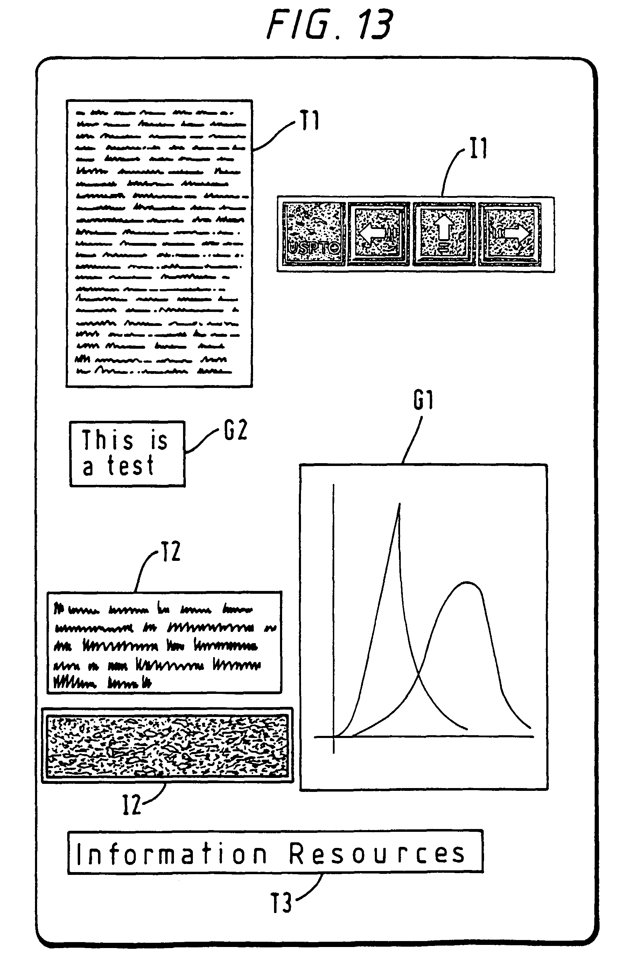

Figure 13 illustrates a facsimile image, comprising text regions T1, T2 and T3, comprising English text of different sizes; simple graphics regions G1 (a graph) and G2 (handwritten text); and image regions I1 and I2.

Referring to Figure 4b, the one, two or three streams of data are formatted in step 234 by the formatter circuit 114. The transmit control circuit 118 signals, in a step 236, to the called terminal 10 via the satellite 16, mobile earth station 14, and mobile FIU 12. For a call to a mobile terminal 10, in the event that the connection is unsuccessful (step 238), the formatted compressed image signal stream from the formatter 114 is supplied to the store 116 in a step 240, together with the called terminal forwarding information determined in step 212.

Then, a signal is transmitted back to the calling terminal in step 246 indicating that the message has been stored, as disclosed in greater detail below.

If a connection is possible (step 238), the compressed image data from the formatter 118 is forwarded to the output buffer 40, and then transmitted via the fixed earth station 18, satellite 16, and mobile earth station 14, to the mobile FIU 12 (step 242). When confirmation of receipt is received from the mobile FIU 12, an acknowledgment is transmitted back to the calling terminal 24 (step 244).

Referring to Figure 4a, when no incoming call is detected in step 202, in step 245 the transmit controller circuit 118 reads the store 116 and determines whether the forwarding information stored for any stored message indicates that an attempt should now be made to transmit that message, as discussed in greater detail below, and if so a transmission event occurs and control passes to the subroutine of Figure 4c.

In step 247 (as in step 236), the transmit control circuit 118 signals to the called terminal 10, and in step 248, the transmission control circuit 118 determines (as in step 238) whether the called terminal 10 is available and, if so, in step 250 (as in step 242) the message is transmitted and, upon acknowledgment of successful transmission from the mobile FIU 12, the stored message is deleted from the store 116 in a step 252.

If it is not possible to connect to the called terminal 10 in step 248, the transmission control circuit 118 determines whether or not the stored message should be deleted (step 254) in accordance with the forwarding information determined in step 212, either because a predetermined time has elapsed since the stored message was initially received or because a predetermined number of unsuccessful attempts to forward the message have been made. If the file is determined to be deleted, step 252 is performed; if not, or after deletion in step 252, control return returns to step 202 of Figure 4a.

The process for a call from a mobile is similar, except that the message is always transmitted to the fixed FIU 20 (i.e. steps 236 to 240 are omitted).

Referring to Figure 4d, in this case, when the fixed FIU 20 receives the compressed message (step 258) it signals to the called facsimile terminal (step 260), which could be another mobile terminal 1010 or a fixed terminal 24, and if the destination terminal is available (step 262) the fax message is transmitted on to it (step 264). Thus, the fixed FIU 20 acts as a forwarding centre without actually decoding the facsimile message.

On the other hand if the destination terminal is unavailable in step 262, the fixed FIU stores the message (step 266) in the store 116, together with a retry profile (as discussed elsewhere herein) which sets transmission events to be executed subsequently in step 245 of Figure 4a, as disclosed above. Thus, the queue of messages stored at a facsimile interface unit 20 may consist not only of messages received and compressed by that interface unit but also messages received in compressed form from a mobile FIU unit.

Referring to Figure 4e, the process of acknowledgement back described in step 246 will now be described in greater detail.

The message comprises a stored facsimile message, into which are inserted facsimile image data corresponding to the following:
1. the date and time of reception of the facsimile message at the FIU
2. the called party number
3. the compression mode, and
4. Any status information that is available on the called party.

For example, when received, such a message might read as follows:

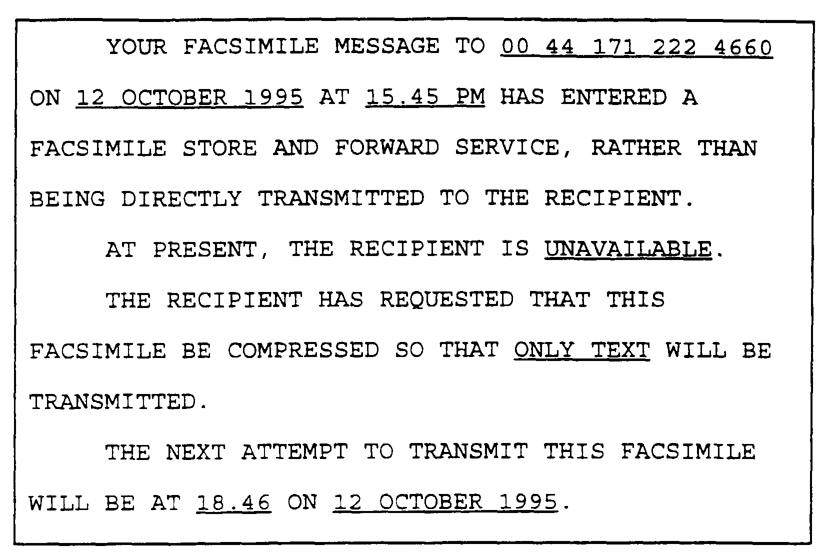

Figure 4e shows the process of operation of the receiver controller 100.

In step 800, this message is generated and prepared for transmission.

In step 802, rather than disconnecting the line after the end of the fax message has been received from the calling terminal 24, in the post message procedures specified in CCITT standard T30, the receive control circuit 100 sends back a procedural interrupt positive (PIP) signal to the facsimile machine 24, which causes the facsimile machine 24 to re-enter the pre-message procedure of CCITT standard T30 (step 802).

In step 804, the receive control circuit 100 determines whether the calling facsimile apparatus 24 has re-entered the pre-message procedure; this is necessary since some few facsimile machines do not fully comply with specification T30.

In the event that the facsimile apparatus 24 does not re-enter the pre-message procedure, in step 806 the receive control circuit 100 terminates the call, and determines whether, in step 206, a caller ID signal was received from the network. A caller ID signal will be available in most of North America and Western Europe, and comprises a 300 bit/s frequency shift keyed (FSK) signal between the first and second rings during the initial ringing cycle (step 808).

Where no caller ID was received on call set up, the receive controller 100 determines whether during the call set up procedure the calling facsimile apparatus 24 supplied a transmitting subscriber identification (TSI) field. This field is optionally according to recommendation T30, but where it is filled it contains the telephone number of the calling party (although this telephone number is not necessarily up to date or correct).

On the first positive outcome of step 808 or 810, in step 812 the receive controller 100 sets up a new call (step 812) to the calling facsimile apparatus 24, and in step 814 transmits the reply facsimile. Likewise, if in step 804 the calling facsimile apparatus 24 successfully re-initiates the call set up procedure, without the previous call being disconnected, the receive controller 100 sends the reply facsimile in step 814.

Thus, in this embodiment, to sum up, the receive control first attempts to transmit a reply message to the calling facsimile without terminating the call from the calling facsimile; and if this is unsuccessful, it firstly attempts to make use of caller ID information on the called number supplied by the telecommunications network 22 (which, where available, is reliable) and, failing this, makes use of the calling telephone number recorded in the TSI field (which is not always present and may not always be reliable).

Thus, the transmitting facsimile 24 is alerted to the fact that the fax message has not been forwarded directly to the destination facsimile 10.

### Decompression

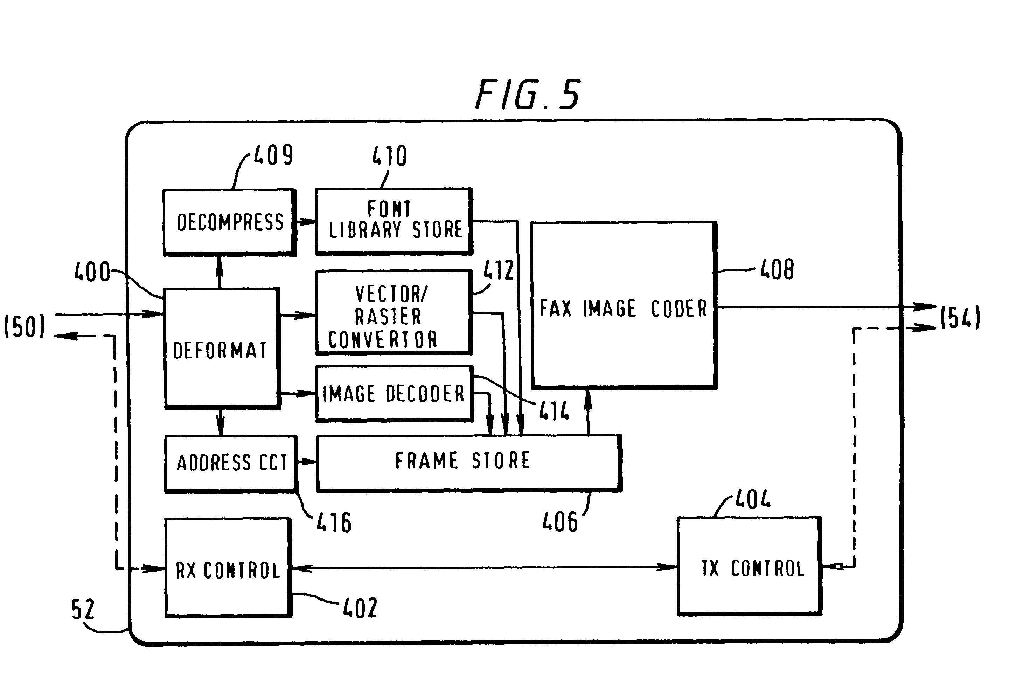

Referring to Figure 5, the corresponding decompression process will now be described.

Figure 5 indicates the components of the receive control circuit 52 of the mobile FIU 12 (the same components are also present in the fixed FIU 20). The receive controller comprises a deformatting circuit 400, operable to reverse the formatting of the formatter circuit 114; a reception control circuit 402 for negotiating the call set up via the satellite 16 with the fixed FIU 20; a transmit control circuit 404 for negotiating the call set up with the mobile facsimile terminal 10; a frame store 406 for storing a binary (thresholded) black/white image of a received page of facsimile; and a facsimile coder circuit 408 for encoding the frame image held in the frame store 406 according to the T4 transmission protocol, connected to supply the fax image to the output buffer 54.

Also provided are a text decompression circuit 409; a font library store 410 storing, for each of a set of text characters (for example the ASCII character set) a bit map font corresponding to an image of the character; a vector to raster converter circuit 412 for receiving the data (e.g. end points, length and angle or spline control points) of a line represented as a vector and constructing an equivalent raster image; and an image decoder circuit 414 operable to perform the inverse decoding process to that applied by the image encoder 410. The font library store, vector/raster converter 412 and image decoder 414 are each arranged to write image data to the frame store 406 under control of an address circuit 416.

### Reception Control

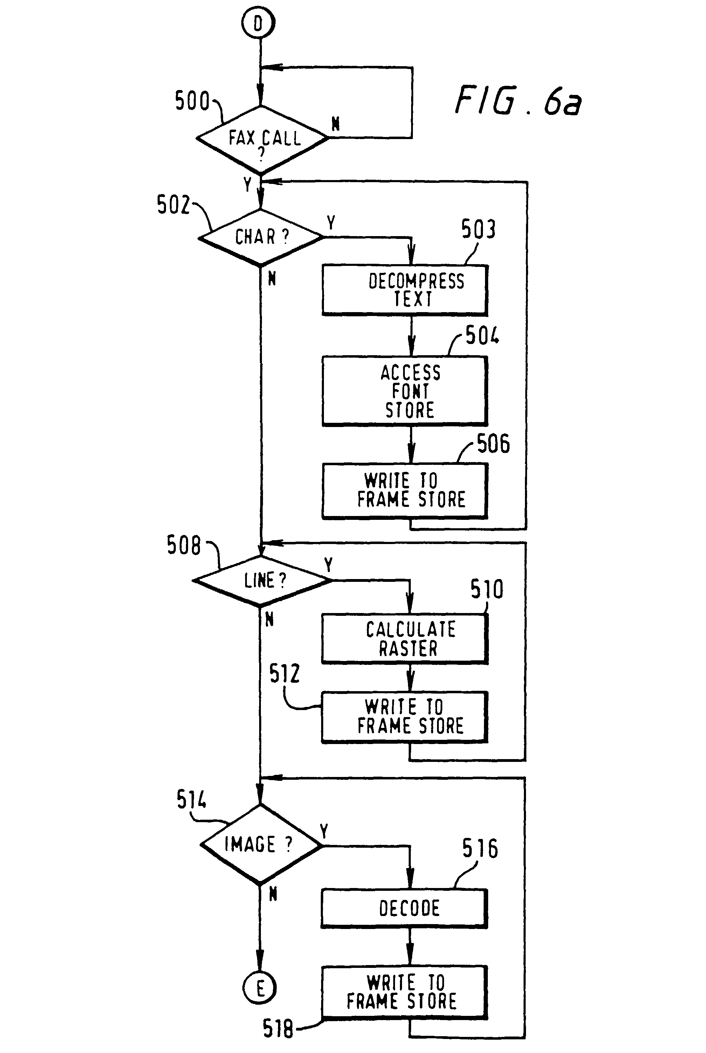

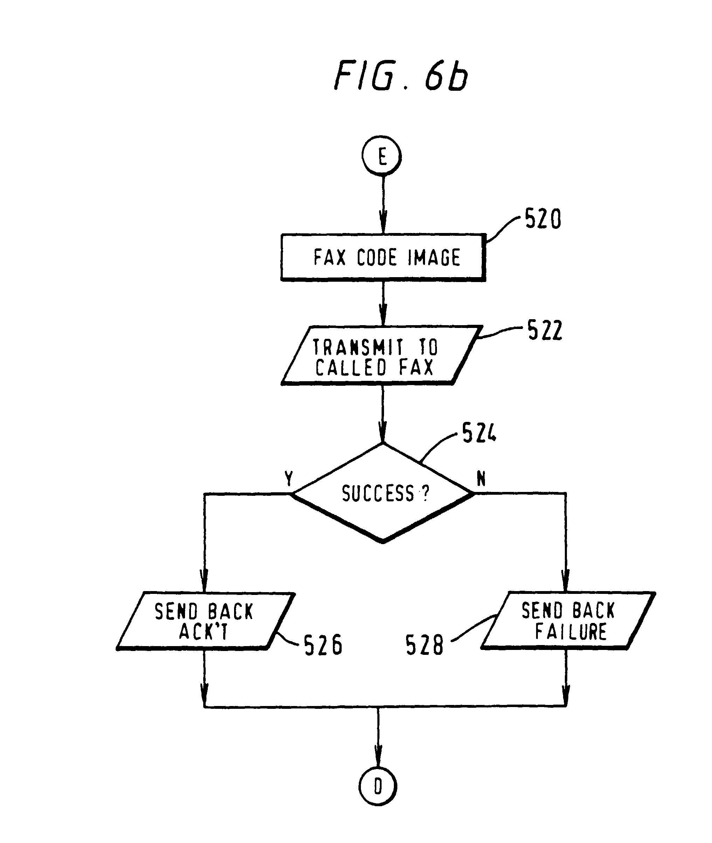

Referring to Figure 6, the operation of the apparatus of Figures 2 and 5 on receiving a compressed signal will now be described in greater detail.

In step 500, when an incoming facsimile call is detected via the satellite 16 and earth station 14, the deformatter circuit 400 supplies the compressed text to the decompressor 409, which outputs the text character codes making up the or each text area to the input ports of the font library store, which functions essentially as a look-up table, to output the corresponding character image to the area of the frame store 406 determined by the address circuit 416, in steps 504 and 506. When all character data has thus been written to the frame store 406, in step 508, line data present is passed to the vector to raster converter circuit 412, which calculates, for each line segment, a corresponding raster image and writes the raster image to the frame store 406 in steps 510 and 512.

After all such line segments have been reconstructed in the frame store, each block of image data is passed from the deformatter 400 in step 514, to the image decoder circuit 414, where it is decoded in step 516 and written to the frame store 406 in step 518.

After all character, line and image data have been reconstructed in the frame store 406, referring to Figure 6b, the fax image coder 408 encodes the image in the frame store 406 in step 520, and in step 522 it is transmitted to the called facsimile device 10 under control of the transmission control circuit 404.

The transmission control circuit 404 determines whether the transmission has been successful and, in the event of success, transmits back (via the receive control circuit 402) a success acknowledgment message in step 526 via the satellite 16 and earth stations 14, 18 to the fixed FIU 20.

In the event that the transmission is unsuccessful (for example because the called facsimile device 10 is not functioning or has run out of paper) a failure message is sent in step 528, via the mobile earth station 14, satellite 16 and fixed earth station 18 to the fixed FIU 20. Thereafter, the step 500 is repeated.

Details of compression and decompression circuits applicable to a preferred embodiment are disclosed in patent application GB 9522487.9 filed on 2nd November 1995, and published under GB-A-2 307 813.

### Database Station 300

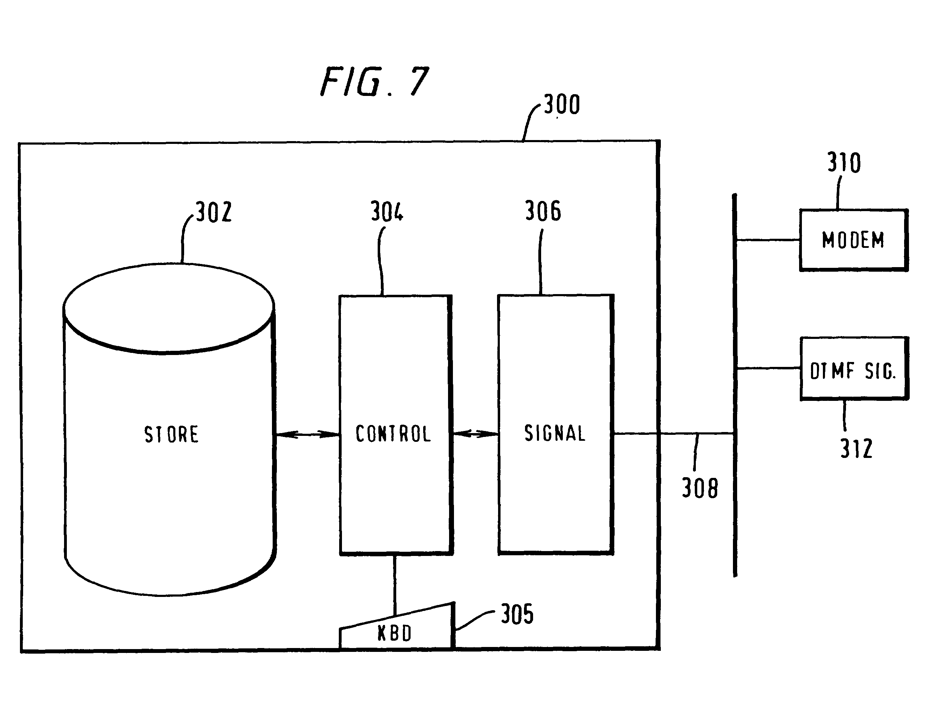

Referring to Figure 7, the database station 300 comprises a store 302 (e.g. a high volume disk drive such as an RAID disk array); a control unit 304 (e.g. a suitably programmed digital computer); a user interface 305 comprising a keyboard and VDU; and a signalling circuit 306 connected to a signalling channel 308 (comprising, for example, a D channel of an ISDN line). The control circuit 304 is arranged to read and write data to the store 302, and to receive data from and transmit data to the signalling circuit 306. Additionally, data may be entered into the store 302 via the keyboard 305 and control unit 304.

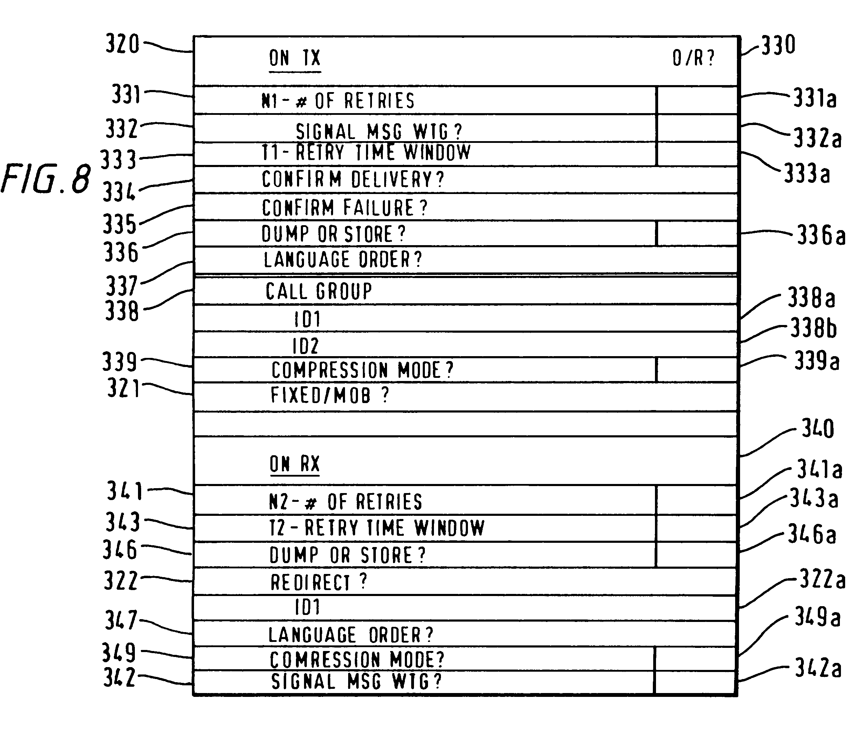

Referring to Figure 8, within the store 302, a record 320 is held for each mobile user (or, to be more specific, each mobile user ID corresponding to one of the mobile terminals 10, 1010). A record 320 may also be held for selected fixed user IDs (e.g. telephone numbers) corresponding to fixed facsimile terminals 24.

Referring to Figure 8, each terminal user record comprises a transmit options record 330 and a receive options record 340. The transmit options record 330 lists default settings for control data to control the mode in which a facsimile message is transmitted from the corresponding terminal (10, 1010 or 24). It may be overridden by control data accompanying the facsimile message, as described in greater detail below.

The receive mode record 340 acts as a filter, set by the mobile terminal to specify the manner in which it is desired that facsimile messages should be received at that mobile terminal (or, in general, by the mobile user at whatever terminal he is presently registered as using). In general, the receive mode record 340 is only necessary for mobile user terminals 10, 1010 since the probability of reaching these by direct transmission is much lower.

### Transmit Mode Record

The transmit mode record 330 comprises the following fields:
N1 - Number of Tries Field (331)
- This field specifies the maximum number of retransmissions of a facsimile message to be attempted, as requested by the transmitting facsimile terminal. This number may be 0, in which case no attempt is made to transmit the message; instead, the message is stored at the FIU 20 in the store 116.
Signal Message Waiting Field (332)
- In the event that the number of retries is set at 0 as discussed above, the transmitting facsimile apparatus may indicate that an alerting signal is sent to the destination facsimile apparatus 10, either on storing the facsimile message (if contact with the mobile facsimile terminal 10 is possible), or on the next contact between the satellite 16 and the mobile earth station 14 and mobile facsimile interface unit 12.
T1 - Retry Time Window Field (333)
- This field sets one or more time windows (comprising start time/date and end time/date pairs) between which message retransmissions is to be attempted. Thus, message retransmissions may be specified to take place only during the working hours of the destination facsimile terminal 10, or only before a certain date, or only after a certain date.
Confirm Delivery Field (334)
- If a flag is set in this field, a confirmation message is transmitted back to the transmitting facsimile apparatus (as disclosed below) on successful transmission of the facsimile message to the destination facsimile apparatus 10.
Confirm Failure Field (335)
- If a flag is set in this field, a message is transmitted back to the originating facsimile terminal 24 in the event that, after the maximum specified number of retries, no successful transmission to the recipient facsimile terminal 10 has been possible. In this case (and in the case of a confirmation of delivery described above) the confirmation message may take the form of the first page of the stored facsimile signal, with an inset message stating either "message transmitted at" (date, time) or "message not transmitted after (N1) attempts".
Dump or Store Field (336)
- A flag set in this field to a value corresponding to "dump" indicates that if the facsimile message has not been successfully transmitted after N1 retries, it is to be discarded, whereas if the flag is set to a value corresponding to "store" the message is to be stored after failure to transmit following N1 retries.
Language Order Field (337)
- Where, as disclosed above, the compression utilises optical character recognition, then the character recogniser may employ various different sets of characters to be recognised; for example, an alphabet corresponding to standard English; an alphabet corresponding to Scandinavian (which overlaps with standard English but includes additional characters); or an entirely different alphabet such as Katakana.
   A facsimile message is usually predominantly in one language, but the language may differ from message to message. Accordingly, a language order indicating, in order of frequency, the languages likely to be used by the transmitting facsimile terminal 10 is stored in the language order field 337.
   For example, for an English or American user, English will be the first specified language, followed perhaps by Scandinavian, then Cyrillic, then Japanese, whereas for a Japanese user the order would be Japanese, followed by English, followed perhaps by Cyrillic and Scandinavian.
   The order in which the languages are specified then determines the order in which the respective character sets are applied by the optical character recogniser to the received facsimile message for compression thereof.
Group Call Field (338)
- If this field is set (the default is unset) then a facsimile is additionally copied to the ID numbers in the following fields 338a, 338b ....
Compression Mode Field (339)
- Where, as described above, the compression circuit at the facsimile interface unit is capable of compressing two different degrees of efficiency (in this case, in order of efficiency, text only; text plus line data; text plus line plus image data; and original fax), the compression mode field 339 is used to indicate which compression mode is, by default, desired by the transmitting party.
   Since the volume of data varies in inverse relationship to the efficiency of compression, the cost of transmitting the data likewise varies.
Fixed/Mobile Field (321)
- This field indicates whether the record 320 relates to a fixed terminal (e.g. 24) or to a mobile terminal (e.g. 10, 1010).

### Receive Mode Record

The receive mode record 340 comprises the following fields:
N2 - Number of Tries Field (341)
- The number of retries specified by the receiving facsimile apparatus by default may be set at a particular level to avoid congestion of the satellite link by attempted retransmissions of facsimiles to the mobile user. This number may differ from the number N1 set by the transmitting facsimile apparatus.
Signal Message Waiting Field (342)
- If the receiving facsimile terminal apparatus (10 or 1010) or facsimile interface unit (12 or 1012) lacks any means for indicating when a signal reflecting a received facsimile message has been received, or if the user thereof simply does not wish to be alerted to received stored facsimiles, then this field may be unset.
T2 - Retry Time Window Field (343)
- The recipient terminal may only be available within limited and well characterisable time periods; where this is the case, the time periods (in the same format as the T1 time windows above) may be stored in field 343.
Dump or Store Field (346)
- This field may be set in the same way as described above in relation to field 336.
Language Order Field (347)
- Depending upon the nationality of the user thereof, different terminals will be more or less likely to receive facsimiles in particular languages. Accordingly, an order of languages may be specified in the field 347, to enable the OCR compression circuit to apply the character sets associated with each language in the order in which they are specified in the field 347.
Redirect Field (322)
- If this field is set, then after N2 unsuccessful attempts to transmit the facsimile, the facsimile is instead transmitted to a further terminal identified by an ID stored in field 322a (e.g. a nearby terrestrial facsimile apparatus).
Compression Mode Field (349)
- The compression mode may be specified, as discussed above in relation to field 339, by the receiving facsimile apparatus.

Certain of the fields (here, 331-333; 336; 339; 341-343, 346 and 349) have associated fields (331a-333a; 336a; 339a; 341a-343a; 346a; 349a) in which an override flag may be set, to indicate that either the calling or called user intends his preference to override that of the other party. The manner of use of the override flags is discussed below.

### Writing and Rewriting the Records

The records 320 within the store 302 may be written to by the control unit 304 in response to a number of actions.

### 1. Direct Access

The user interface circuit 305 may be manipulated by a human operator (not shown) at the database station 300 to cause the control device 304 to update a user's record in the store 302 in response to telephoned or written instructions from the user.

### 2. Remote Data File Transmission

Alternatively, a user may, using a suitable computer (not shown), prepare a file of data to be written to his record in the store 302 and transmit the same via a modem 310 connected to the signalling channel 308. The message transmitted by the modem 310 is prefixed by a header indicating that it is a message to cause the writing or re-writing of the store 302.

### 3. FIU Data Input

In a preferred embodiment, each mobile FIU is provided with a user interface (not shown), and is arranged to prompt the user for data defining the contents of the fields of his user record 320 and, in response to the entry of such data by the user, to generate and transmit a data message via the satellite 16 to the fixed earth station 18 and facsimile interface unit 20. The fixed earth station facsimile unit 20 is arranged to recognise such an identified message and to transmit it via the signalling channel 308 to the database station 300.

### 4. Facsimile Recognition Input

Whereas the mobile FIU (12,1012) is likely to be closely associated with the facsimile apparatus (10,1010) and hence the user thereof, so as to be accessible to him for generating updated data, the fixed earth station facsimile interface unit 20 is likely to be located close to the fixed earth station 18 but may be a long distance from any given fixed facsimile terminal 24, and hence inaccessible to users thereof for signalling control data.

Accordingly, in a preferred embodiment, a user of a fixed facsimile apparatus 24 may send control data, for recognition by the facsimile interface unit 20, by the expedient of filling in the required data values on a (preferably preformatted) sheet (which may, for example, correspond in layout to the form of Figure 8) in legible typescript, and transmitting this facsimile document to a particular telephone number associated exclusively with the FIU 20.

On being addressed via this telephone number, the FIU 20 applies optical character recognition to the received facsimile message to determine the data corresponding to an entry in each of the fields of the record 320, and sends a corresponding data message via the signal channel 308 to the database station 300.

### General Operation of Database Station 300

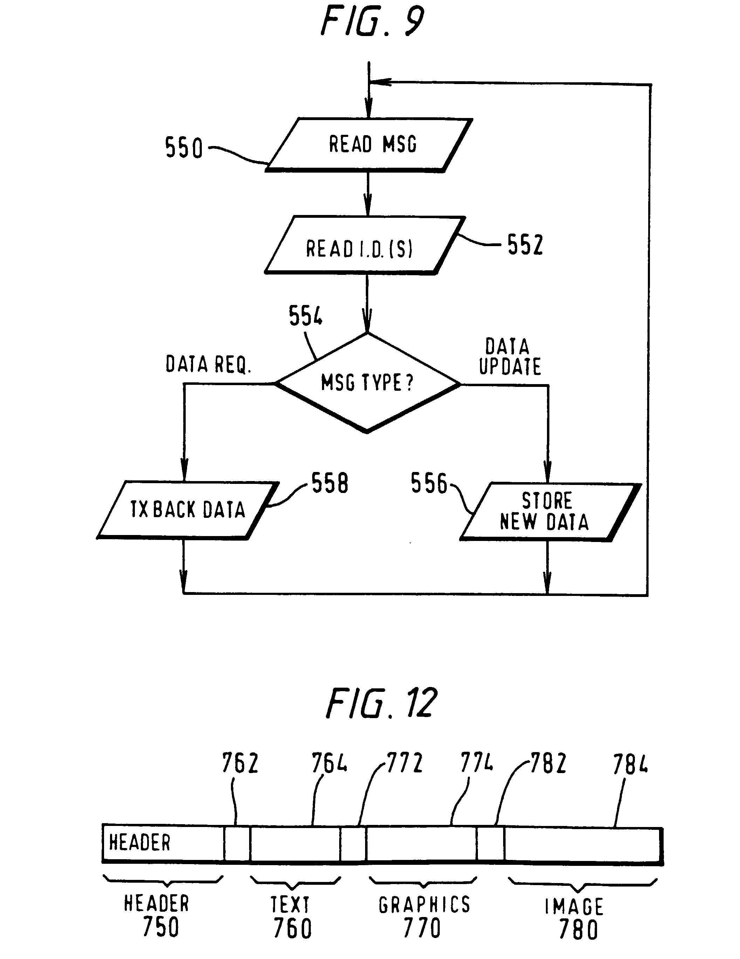

Referring to Figure 9, on receipt of a message by the signalling circuit 306, in a step 550 the message is read and in a step 552, the header is read by the control unit 304.

In a step 554, the message type is determined from the header thereof. In the event that the message is a data update message as described above, in a step 556 the new data is stored in the store 302. In the event that the message is a data request message, the record corresponding to the ID read in step 552, is read and the contents are transmitted back in step 558.

### Command Data

As described above, a receiving terminal may specify, in a field 340, its preferences for receiving stored facsimile messages, and a transmitting terminal may store preferences for transmitting stored facsimile messages. In addition to these long term preferences, according to a preferred embodiment the transmitting terminal may also transmit command data specifying the manner in which one particular, accompanying, facsimile message is to be treated.

Preferably, each mobile terminal FIU (12,1012) is provided with the user interface apparatus (not shown) referred to above, which is arranged also to operate in a command data input mode, in which, prior to transmission of a facsimile call, it receives command data from the user, and transmits this as a message prefixing and accompanying the facsimile message.

Further, the fixed earth station FIU 20 (and preferably each mobile FIU 1012, 12) is arranged, after receiving the first page of a facsimile message from a transmitting facsimile terminal 24 (10,1010) to determined whether that first page is a predefined header page containing command data which specifies transmission options corresponding to the contents of fields 331-339 shown in Figure 8 and, if so, performs optical character recognition to extract the relevant data.

Thus, a conventional and unmodified fixed (or mobile) facsimile terminal, remote from the FIU 20, may be used to supply information for controlling the handling of the facsimile message by the satellite communication system. Having thus identified a header page containing control information, any area which is recognised as consisting only of control information is not subsequently transmitted, to conserve bandwidth.

### Reconciliation of Control Data

To recap the foregoing, control data concerning the handling of the store and forward facsimile message may be available from one or more the three following sources.
1. Command data associated with the particular facsimile message, and received with the facsimile message transmitted by the transmitting facsimile terminal.
2. Transmitting facsimile preference information associated with the transmitting facsimile apparatus stored in a transmission preference record 330 in the central database station 300.
3. Receiving facsimile preference data relating to the receiving facsimile apparatus held in a receiving preference data record 340 within the database station 300.

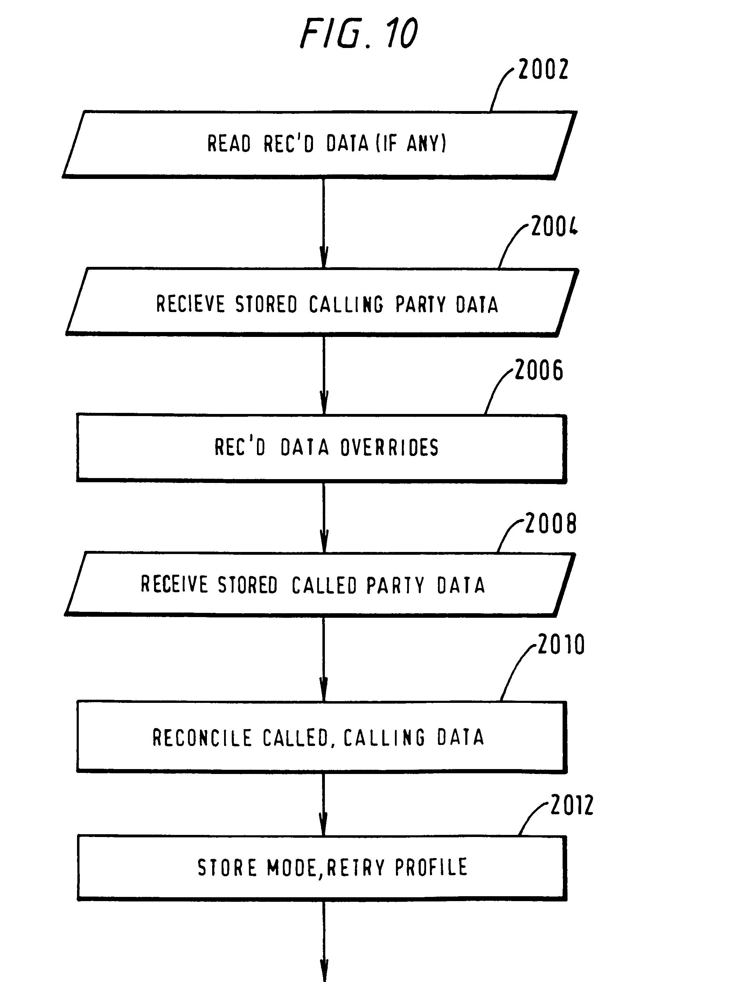

Referring to Figure 10, the fixed earth station FIU (which determines the handling of the facsimile message) reads, in a step 2002, any command data received from the transmitting facsimile apparatus as described above.

In a step 2004, the facsimile interface unit 20 receives from the central database station 300 the stored preference data record 330 (if any) relating to the calling facsimile terminal.

In a step 2006, the transmit control circuit 118 compares the command data and the stored transmit preference data and, where two different data values are specified for the same item of control information, selects the received command data value. Thus, the stored preference data is used to supplement the received command data or to replace it where it does not exist.

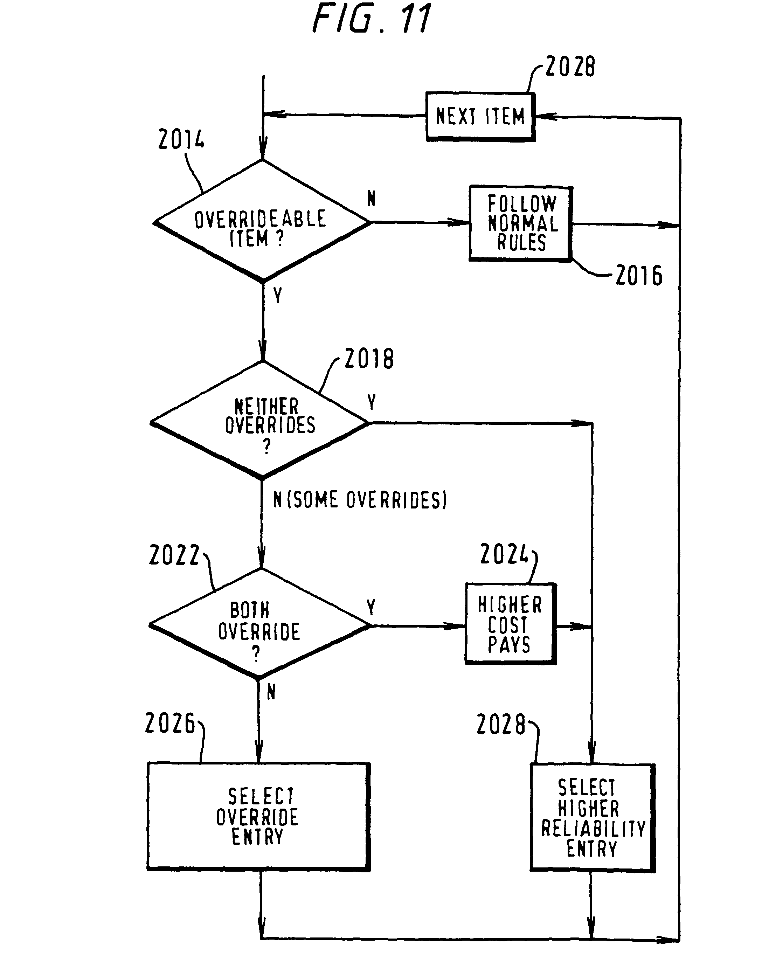

In a step 2008, the transmit control circuit 118 of the fixed earth station and facsimile interface unit 20 receives the preference data record 340 relating to the called facsimile terminal, and in a step 2010 (described in greater detail in relation to Figure 11 below) the transmit control circuit 118 compares the control data specified by the calling party with that specified by the called party and reconciles any differences between the two. In each case where the calling and called party preferences are the same, the common data value is selected. For those items where different data are stored, the process of Figure 11 is followed.

In step 2012, the transmit control circuit 118 stores the compression mode data and the transmission retry data (and any other call control data thus derived) as a profile to control the forwarding of the facsimile message.

The steps described above are comprised within step 212 of Figure 4a.

Referring to Figure 11, the transmit control circuit 118 compares each possible data field of the transmit control data with its corresponding data field of the received control data (if any); thus N1 is compared with N2; and Tl is compared with T2; and so on. In step 2014, the transmit control 118 determines whether the item of data has the possibility of an associated override flag; if not, in step 2016, an ad hoc rule is applied to the item to allow either the called party or the calling parties preference to override; for example, the calling party is likelier to know in which language the facsimile will be transmitted, and so for the OCR language order fields, the calling party data overrides.

On the other hand, if the item of data is one which may carry an associated override flag, where neither party has set the override flag, so that either party has specified that they are content for their preference to be overridden, the entry of the two which offers the higher likelihood of reliable transmission is selected in step 2028; for example, the greater number of retries or the longer retransmissions time interval or the higher accuracy compression mode is selected.

If, in step 2018, at least one override flag is determined to have been set, then in step 2022 it is determined whether both override flags are set. If so, (i.e. if both users have specified that their wishes are to override), then for the data item concerned the higher reliability entry is again selected, but in step 2024, the transmit controller records an indication that the difference in cost between the two selected options is to be carried by the party whose choice overrode.

If in step 2022 it is determined that only one party set the override flag, then the entry associated with the override flag is selected in step 2026. The next item in dispute is selected in step 2028 and the process is repeated until each item of data has been reconciled.

### Use of Control Data

The compression mode data (compression mode and language order) is used, as described above, to compress the facsimile signal.

The delivery data (number of retries and retry time window) is used by the transmit controller 118 to store a retry profile associated with the facsimile message, specifying the future points in time at which retransmissions is to be attempted, thus setting the transmission events utilised in step 245 of Figure 4a.

If the number of tries (N1 or N2, or the selected number of retries based on both) is zero and the Signal Message Waiting field is set, then instead of performing steps 242, 244 and 247 to 252, the facsimile interface unit 20 merely transmits a short message indicating that a message is waiting for collection, on the next occasion when the mobile earth station 14 or 1014 is in signalling communication via the satellite 16.

The mobile facsimile interface unit 12 or 1012 receives the message waiting indication signal and generates a corresponding indication to the user, for example by illuminating an LED to indicate that a message is waiting, or by generating locally a facsimile message stating that a message is waiting and transmitting the message to the facsimile terminal 10 or 1010.

In this embodiment, the mobile facsimile interface unit 12 or 1012 includes a user input means (for example button) permitting the user to input a command to receive stored facsimile messages, and to generate a corresponding data message which is transmitted via the satellite 16 to the fixed earth station facsimile interface unit 20. On receipt thereof, the transmit controller 118 thereof generates a transmission event and thereafter follows the process of Figure 4c.

In the event that the transmit terminal has requested a confirmation of delivery, then after successful transmission in step 250 and receipt of the acknowledge back of step 526, if the ID or telephone number of the transmitting facsimile terminal is known a facsimile message back is transmitted.

As described above in relation to the acknowledgement of storage of a message, the facsimile message back preferably refers to the called number, the date on which the delivered facsimile message was originally received by the system, and the mode, date and time according to which the facsimile was delivered, these items of information being inserted into a stored message of predetermined format which is then expanded into a conventional facsimile signal for transmission.

Likewise, if the transmitting facsimile terminal has requested confirmation of failure to transmit the facsimile after exhaustion of the requisite number of retries, and if the fixed earth station facsimile interface unit 20 has the telephone number to do so, a facsimile message indicating failure is transmitted back; in this case, the entire facsimile concerned may be transmitted back to the sender together with delivery data as discussed above.

If, depending on the preference and command data received from the calling and called parties the mode is set to "dump", then in step 254 after the requisite number of retries the facsimile message is deleted from storage at the fixed earth station facsimile interface unit. If the mode is set to "store", then after the requisite number of retries the facsimile message is stored; in this case, preferably, a message waiting signal (as described above) is transmitted to the destination facsimile interface unit on the next occasion when contact is made via the satellite 16.

Where group call or call redirect data is included, the facsimile interface unit 20 sets up the necessary calls to the recorded telephone numbers in generally conventional fashion.

### Adaptive Control

In a further embodiment, the control device 304 of the central database station 300 is arranged to monitor indicated caller data, to update the calling and/or called party records within the store 302.

Thus, the customer communication circuit 120 in the fixed earth station facsimile interface unit 20 is arranged, on each occasion, to transmit to the central database station 300 the language used for optical character recognition (i.e. successfully used); the time at which successful transmission of the facsimile message occurred and/or times at which unsuccessful transmissions were attempted; and the transmission mode and any other data selected by the calling party.

The control device 304 is arranged to buffer received data for a plurality of previous calls, and to use the received data to derive or modify the store data held within the store 302. For example, the language successfully used most often in the last, say, 10 transmissions from a given terminal is written to the transmit data record 330 for that terminal, and likewise the language used successfully to compress messages to a given terminal on the last 10 occasions is used to write to the called data record 340 for that terminal.

Times on which a given terminal has been available are used to derive default time windows for contacting that terminal. Likewise, for each other item of data, the average or most used value over (for example) the last 10 or more calls to the terminal or from that terminal set the default data record values for that terminal.

The computer 304 may additionally use other data for setting default values; for example, where the position or last reported position of a mobile terminal is known, the daylight hours within the time zone concerned may be used to set default reception time windows.

### Other embodiments or modifications

Rather than attempting discrete retransmissions at periodic intervals as described above, where the communication systems operates to register mobile subscribers in an idle mode (as in the manner of a terrestrial or satellite cellular system) a store may contain, in the entry for the mobile subscriber, a field which is set to indicate that a message is waiting for the subscriber. The store may, for example, be equivalent to the home or visiting location registers of the GSM system and conveniently may be implemented by the central database station 300 as described above.

On registration of the mobile subscriber, as is conventional in such systems, a message is sent to the home or visiting location register and, according to this further embodiment of the invention, where the message waiting flag is set, the database station 300 signals to the fixed earth station facsimile interface unit via the signalling channel to retransmit the facsimile message.

Although in the foregoing described embodiment, separate facsimile interface units have been described, it will be apparent that the facsimile interface unit could be combined with a facsimile terminal directly, thus rendering unnecessary those parts of its function concerned with signalling and reconstruction of the fax encoded image.

Although the fixed earth station FIU has been described in such a manner as to handle one incoming facsimile call from a PSTN at a time, in practice, the FIU would comprise a pool of such receiving interfaces assigned to multiple incoming calls so as to permit multiple incoming facsimile calls to be handled simultaneously. Conveniently, however, all such parallel interfaces of the pool share a common store 116.

Very conveniently, the store 116 would be partitioned into a plurality of mail box records, one for each mobile subscriber, in the manner of a conventional e-mail or voice mail service, and each subscriber would be able to poll his mailbox to determine whether a message was recorded for subsequent delivery as required.

Although in the above described embodiments each satellite, and hence each fixed earth station and fixed facsimile interface unit, covers a wide geographical area and hence a large number of mobile subscribers, so that it is convenient to provide a message store 116 thereat, it would equally be possible to provide only a single message store 116 externally of all fixed facsimile interface units, thus providing a central message service to which all fixed FIUs would be connected via a signalling, message or data channel. Likewise, the scheduling or retransmissions could also be provided at a central location managing all fixed facsimile interface units. This central location could be the central database station 300, although it will be appreciated that the two functions of storing preference data and storing messages could readily be separated as in the above described embodiments.

Whilst the mobile terminal facsimile interface units of the above described embodiments are individual units, which may be hand portable, it would equally be possible for larger units to be provided (for example on a ship or an air vessel) which would support multiple facsimile terminals, somewhat in the manner of a local PABX. In this case, the mobile facsimile interface unit terminal could itself form part of the messaging system, storing messages for subsequent transmission, and functioning somewhat in the manner of the fixed facsimile interface unit described in the above embodiments.

Since the mobile facsimile interface unit generally has the possibility of transmitting a message immediately (i.e. in circuit mode) it will generally be desirable (as in the above described embodiments) for immediate transmission to take place. However, as an additional option, in a further embodiment the mobile facsimile interface unit is selectable between such a mode and a message mode, in which rather than being directly transmitted, the facsimile is treated as a store and forward message.

In a first aspect of this embodiment, this is achieved merely by transmitting command data specifying that immediate transmission is not to be attempted. The facsimile message will thus be stored in the fixed earth station FIU to be retransmitted later in accordance with the number of retries and retry time windows determined as described above.

In a second embodiment of this type, the facsimile message is stored at the mobile facsimile interface unit for subsequent retransmission; this may be specified in accordance with additional transmission time data entered into the mobile facsimile interface unit and not transmitted further via the satellite link. For example, such additional information could be entered by additional dial numbers following the called subscriber number, which are filtered out by the mobile facsimile interface unit and not transmitted further.

Although in the foregoing a central database station has been described, and this is convenient where the stored customer data is to be integrated with other customer data such as billing records or customer location, it would equally be possible to have distributed records; for example, a home database similar to a GSM home location register (HLR) could be provided in the original locality of a roaming mobile user storing data relevant to that user and other users registered in the same locality, and there could additionally be providing visiting location registers (VLRs) for performing the same function as in GSM.

Alternatively, it would be possible for each mobile facsimile interface unit 12, 1012... to store its own called and calling party data and to transmit these via the satellite link on each occasion of use; this is not as preferred, however, since it would in each case entail additional communication over the satellite link.

Although a single, deterministic process for reconciling the delivery preferences of the called and calling parties has been described, it would be possible to provide instead a pair of independently operating control processes (either on the same host computer or on different host computers), each associated with a respective one of the called and calling party records, to perform reconciliation by a real time electronic negotiation process by exchange of negotiation signals; such independent processes or programs could be what are currently termed "agents", which term is well understood to those skilled in the art. The location of such programs within the system does not fundamentally affect the manner of operation of the invention. Although in the foregoing, override flags have been described which simply allow two levels of priority; high priority (i.e. override flag set) and low priority (i.e. override flag not set), it will be recognised that in further embodiments multiple bits could be allocated to the override fields so as to allow the specification of multiple different levels of priority, to facilitate the reconciliation performed by the system.

In the above described embodiments, the data compression is performed at a facsimile interface unit which is separate of an earth station. However, it will be apparent that the facsimile interface unit could be integrated into the earth station 18. Alternatively, any data compression could be performed centrally, separately of the facsimile interface units 20, 12 which would in this case merely forward a received facsimile call to the central store and forwarding station which would encode the call and attempt to call the mobile facsimile terminal 10.

Although separate components have been described in the above embodiment, it will be apparent that many of the processing functions could be combined into a smaller number of processors or even a single suitably programmed digital processor performing all the functions of the apparatus of Figures 1, 3 and/or 5.

Although a satellite system has been described it will be apparent that the invention could also be applied to terrestrial mobile communications systems, such as digital cellular communications systems (e.g. GSM).

Many other modifications or embodiments will be apparent to the skilled reader.

Reference is made to a co-pending European application EP 96935 164.2 claiming priority from GB 9522487.9) and published under WO-A-97/16920.

## Claims

1. A store-and-forward image communications system for transmitting an image signal from a first terminal (24) to a second terminal (10), the system comprising: a transmission path (12,14,16,18,20) between the first and second terminals (10,24); a first image signal interface (20) in said transmission path at which interface said image signal is received from the first terminal (24); a second image signal interface (12) arranged between said first interface (20) and said second terminal (10), and arranged remote from said first interface (20), to communicate with the first image signal interface (20) in a selected one of a plurality of transmission modes, each interface also being arranged to communicate with a respective one of said terminals (24,10); a message store (116) connected to said first interface (20) to store and subsequently recall signals received at the first interface (20); a data store (302) located separate and remote from said terminals (10, 24) and containing at least one record (320) comprising preference data relating to preferred ones of said transmission modes for use in communications between said interfaces for sessions with at least one of said first and second terminals (10,24); a transmission controller (118) connected to said first interface (20) for selecting from said transmission modes in accordance with said preference data; and a data updater (304) arranged to update the or each said record (320).

2. A system as claimed in claim 1, wherein the transmission controller (118) is arranged to select from said transmission modes by reconciling conflicting reception preference data (340) relating to preferred ones of said transmission modes for said second terminal (10) and transmission preference data (330) relating to preferred ones of said transmission modes for said first terminal (24).

3. A system according to claim 2, in which the transmission controller (118) is connected to read said transmission preference data from said first terminal (24) via said first image signal interface (20).

4. A system as claimed in claim 2, in which at least one of said reception preference data and said transmission preference data comprises at least one priority indicator (331a), indicating the extent to which one of said preference data is intended to override the corresponding other one of said reception preference data and said transmission preference data.

5. A system according to claim 4, in which said priority indicator is utilised in allocating respective charges to be borne by the respective users of said first and second terminals (10,24).

6. A system according to any preceding claim, further comprising an image compressor (102-114).

7. A system according to claim 6, in which said transmission modes comprise a plurality of compression modes in which the image compressor (102-114) is selectively operable.

8. A system according to claim 7, in which the compression modes include a text recognition mode in which said image compressor (102-114) converts areas of said image recognised as text into data representing characters of said text.

9. A system according to any preceding claim, in which the preference data comprises data relating to the time at which retransmissions of the stored data should take place.

10. A system according to any preceding claim, in which the transmission path comprises a radio link.

11. A system according to any preceding claim, in which at least one (10) of said first and second terminals is a mobile terminal.

12. A system according to any preceding claim, in which the transmission path comprises a satellite.

## Patentansprüche

1. Speicherndes und weiterleitendes Bildkommunikationssystem zur Übermittelung eines Bildsignals von einem ersten Terminal (24) zu einem zweiten Terminal (10), aufweisend:
einen Übertragungsweg (12, 14, 16, 18, 20) zwischen dem ersten und dem zweiten Terminal (10, 24); ein erstes Bildsignalinterface (20) in dem Übertragungsweg, wobei das Bildsignal vom ersten Terminal (24) bei dem Interface empfangen wird; ein zwischen dem ersten Interface (20) und dem zweiten Terminal (10) entfernt von dem ersten Interface (20) angeordnetes zweites Bildsignalinterface (12) zur Kommunikation mit dem ersten Bildsignalinterface (20) in einem ausgewählten von mehreren Übertragungsmodi, wobei jedes Interface auch eingerichtet ist mit einem entsprechenden der Terminals (24, 10) zu kommunizieren; einen mit dem ersten Interface (20) verbundenen Nachrichtenspeicher (116) zur Speicherung und zum nachfolgenden Aufrufen von bei dem ersten Interface (20) empfangenen Signalen; einen von den Terminals (10, 24) getrennt und entfernt angeordneten Datenspeicher (302), der mindestens einen Datensatz (320) mit Vorzugsdaten beinhaltet, die sich auf bevorzugte der Übertragungsmodi zur Verwendung bei der Kommunikation zwischen den Interfaces bei Verbindungen mit Beteiligung des ersten und/oder des zweiten Terminals (10, 24) beziehen; eine mit dem ersten Interface (20) verbundene Übertragungssteuerung (118), um entsprechend den Vorzugsdaten eine Auswahl aus den Übertragungsmodi zu treffen; und einen Datenaktualisierer (304) zur Aktualisierung des bzw. jedes Datensatzes (320).

2. System nach Anspruch 1, wobei die Übertragungssteuerung (118) eingerichtet ist, ein Auswahl aus den Übertragungsmodi zu treffen, indem miteinander in Konflikt stehende Empfangsvorzugsdaten (340), die sich auf bevorzugte der Übertragungsmodi für das zweite Terminal (10) beziehen, und Übertragungsvorzugsdaten (330), die sich auf bevorzugte Übertragungsmodi für das erste Terminal (24) beziehen, miteinander in Einklang gebracht werden.

3. System nach Anspruch 2, wobei die Übertragungssteuerung (118) so verbunden ist, daß die von dem ersten Terminal (24) kommenden Übertragungsvorzugsdaten über das erste Bildsignalinterface (20) gelesen werden.

4. System nach Anspruch 2, wobei die Empfangsvorzugsdaten und/oder die Übertragungsvorzugsdaten mindestens einen Prioritätsindikator (331a) beinhalten, der angibt, inwieweit einen Vorzugsdaten der Vorrang über den entsprechenden anderen Empfangsvorzugsdaten bzw. Übertragungsvorzugsdaten gegeben werden soll.

5. System nach Anspruch 4, wobei der Prioritätsindikator zur Zuordnung entsprechender Kosten, die von den entsprechenden Nutzern des ersten und des zweiten Terminals (10, 24) getragen werden sollen, verwendet wird.

6. System nach einem der vorhergehenden Ansprüche mit einem Bildkompressor (102-114).

7. System nach Anspruch 6, wobei die Übertragungsmodi mehrere Kompressionsmodi umfassen, in denen der Bildkompressor (102-114) wahlweise betrieben wird.

8. System nach Anspruch 7, wobei die Kompressionsmodi einen Texterkennungsmodus beinhalten, in dem der Bildkompressor (102-114) Bereiche des Bilds, die als Text erkannt werden, in Daten umwandelt, die Schriftzeichen des Texts darstellen.

9. System nach einem der vorhergehenden Ansprüche, wobei die Vorzugsdaten Daten beinhalten, die sich auf die Zeit beziehen, zu der erneute Übertragungen der gespeicherten Daten stattfinden sollen.

10. System nach einem der vorhergehenden Ansprüche, wobei der Übertragungsweg eine Funkverbindung beinhaltet.

11. System nach einem der vorhergehenden Ansprüche, wobei mindestens eines (10) der beiden ersten und zweiten Terminals ein Mobilterminal ist.

12. System nach einem der vorhergehenden Ansprüche, wobei der Übertragungsweg einen Satelliten beinhaltet.

## Revendications

1. Système de communications d'images par stockage-et-transfert pour transmettre un signal d'image d'un premier terminal (24) à un second terminal (10), le système comprenant : un chemin de transmission (12, 14, 16, 18, 20) entre les premier et second terminaux (10, 24); une première interface (20) de signal d'image dans ledit chemin de transmission, laquelle interface reçoit ledit signal d'image provenant du premier terminal (24); une seconde interface (12) de signal d'image disposée entre ladite première interface (20) et ledit second terminal (10), et disposée loin de ladite première interface (20), pour communiquer avec la première interface (20) de signal d'image dans un mode de transmission sélectionné parmi une pluralité de modes, chaque interface étant également disposée de façon à communiquer avec un terminal respectif desdits terminaux (24, 10); une mémoire (116) à messages reliée à ladite première interface (20) pour stocker et rappeler ultérieurement les signaux reçus par la première interface (20); une mémoire (302) de données située à l'écart et loin desdits terminaux (10, 24) et contenant au moins un enregistrement (320) comprenant des données de préférence concernant les modes de transmissions préférés pour les communications entre lesdites interfaces pour des sessions avec au moins l'un desdits premier et second terminaux (10, 24); un contrôleur de transmission (118) relié à ladite première interface (20) pour sélectionner l'un desdits modes de transmission d'après lesdites données de préférence; et un programme de mise à jour (304) de données, adapté pour mettre à jour ledit ou chacun desdits enregistrement(s) (320).

2. Système selon la revendication 1, dans lequel le contrôleur de transmission (118) est adapté pour sélectionner l'un desdits modes de transmission en faisant accorder les données de préférence de réception (340) concernant des modes de transmission préférés desdits modes pour ledit second terminal (10) et les données de préférence de transmission (330) concernant des modes de transmission préférés desdits modes pour ledit premier terminal (24).

3. Système selon la revendication 2, dans lequel le contrôleur de transmission (118) est connecté de façon à pouvoir lire lesdites données de préférence de transmission provenant dudit premier terminal (24) via ladite première interface (20) de signal d'image.

4. Système selon la revendication 2, dans lequel l'une au moins desdites données de préférence de réception et desdites données de préférence de transmission comprend au moins un indicateur de priorité (33 la), indiquant dans quelle mesure l'une desdites données de préférence est censée avoir la priorité sur l'autre donnée correspondante desdites données de préférence de réception et desdites données de préférence de transmission.

5. Système selon la revendication 4, dans lequel ledit indicateur de priorité est utilisé pour affecter des charges respectives devant être supportées par les utilisateurs respectifs desdits premier et second terminaux (10, 24).

6. Système selon l'une quelconque des revendications précédentes, comprenant en outre un compresseur d'images (102-114).

7. Système selon la revendication 6, dans lequel lesdits modes de transmission comprennent une pluralité de modes de compression dans lesquels on peut faire fonctionner le compresseur d'images (102-114) de manière sélective.

8. Système selon la revendication 7, dans lequel les modes de compression comprennent un mode de reconnaissance de texte dans lequel ledit compresseur d'images (102-114) convertit des zones de ladite image reconnues comme du texte en des données représentant les caractères dudit texte.

9. Système selon l'une quelconque des revendications précédentes, dans lequel les données de préférence comprennent des données concernant l'heure à laquelle les retransmissions des données stockées doivent avoir lieu.

10. Système selon l'une quelconque des revendications précédentes, dans lequel le chemin de transmission comprend une liaison radio.

11. Système selon l'une quelconque des revendications précédentes, dans lequel l'un au moins (10) desdits premier et second terminaux est un terminal mobile.

12. Système selon l'une quelconque des revendications précédentes, dans lequel le chemin de transmission comprend un satellite.
